# EUROPEAN PATENT SPECIFICATION

(11) **EP 4 459 352 B1**
(45) Date of publication and mention of the grant of the patent: **02.09.2026**
(21) Application number: 24201333.2
(22) Date of filing: 19.09.2024
(51) Int. Cl.: G02B 9/62, G02B 13/00

(54) **OPTICAL SYSTEM, CAMERA MODULE, AND ELECTRONIC DEVICE**
OPTISCHES SYSTEM, KAMERAMODUL UND ELEKTRONISCHES GERÄT
SYSTÈME OPTIQUE, MODULE DE CAMÉRA ET DISPOSITIF ÉLECTRONIQUE

(30) Priority: 19.09.2023 CN 202311211261
(43) Date of publication of application: 06.11.2024
(73) Proprietor: Jiangxi OFILM Optical Co., Ltd., Nanchang, Jiangxi 330096 (CN)
(72) Inventor: WANG, Guogui, Nanchang 330096 (CN); XU, Biao, Nanchang 330096 (CN); LI, Xiangyu, Nanchang 330096 (CN); WANG, Xianjie, Nanchan 330096 (CN)
(74) Representative: Metida

(56) References cited:
- CN-A- 113 391 430

## Description

### FIELD

The subject matter relates to field of optical imaging, and more particularly, to an optical system, a camera module, and an electronic device.

### BACKGROUND

In recent years, electronic devices equipped with cameras, including portable information terminals such as smartphones, digital cameras, laptops, tablet computers, have developed rapidly, and people's requirement for high imaging quality is increasing. In order to provide users with better photographing experience, the optical system is required to have higher resolution and imaging quality, and the optical system also needs to adapt to photographing requirements in various environments, such as photographing in a low light environment such as a night scene, a rainy day, and starry sky.

However, it is usually necessary to increase a quantity of lenses to achieve higher resolution, which increases overall length of the optical system. Increasing an amount of light entering the optical system can meet the photographing requirements in various environments, that is, it is necessary to increase an aperture of the optical system. Thus, a structure of the optical system becomes more complex, a size of a camera module is increased, the overall length of the camera module is increased, and the camera module is inapplicable to electronic products with a light, thin, and compact design. CN113391430A describes an optical system comprising six lenses that prioritize high image quality and a high screen-to-body ratio. By configuring the refractive powers and surface shapes of the lenses, specifically maintaining a positive first lens and a negative second lens, the system achieves a compact "small head" design.

### SUMMARY

An object of the present application is to provide an optical system, a camera module, and an electronic device, the optical system satisfies the requirements of large aperture, miniaturization, and good imaging effect.

In order to achieve the object of the present application, the present application provides the following technical solutions:
In a first aspect, the present application provides an optical system. The optical system consists of six lenses having refractive power. From an object side to an image side along an optical axis, the six lenses sequentially include a first lens, a second lens, a third lens, a fourth lens, a fifth lens, and a sixth lens. The first lens has positive refractive power, and an object side surface and an image side surface of the first lens are convex near the optical axis. The second lens has negative refractive power, and an image side surface of the second lens is concave near the optical axis. The third lens has refractive power, an object side surface of the third lens is convex near the optical axis, and an image side surface of the third lens is concave near the optical axis. The fourth lens has negative refractive power, an object side surface of the fourth lens is concave near the optical axis, and an image side surface of the fourth lens is convex near the optical axis. The fifth lens has positive refractive power, and an object side surface of the fifth lens is convex near the optical lens. The sixth lens has negative refractive power, an object side surface of the sixth lens is convex near the optical axis, and an image side surface of the sixth lens is concave near the optical axis.

The optical system satisfies the relational expression: 1.9<FNO<2.3, 85deg<FOV<100deg, 1.1<TTL/ImgH<1.4, wherein, FNO is an aperture number of the optical system, FOV is a maximum field of view of the optical system, and ImgH is half of an image height corresponding to a maximum field of view of the optical system.

The first lens has positive refractive power, and the object side surface and image side surface of the first lens are both convex near the optical axis, which is favorable for shortening a total optical length of the optical system, compressing light direction of respective field of view, and reducing spherical aberration, thereby satisfying requirements of high image quality and small size of the optical system. It is also beneficial for improving the positive refractive power of the first lens so as to further provide a reasonable incident angle of light to guide the edge light. The second lens has negative refractive power, and the image side surface of the second lens is concave near the near optical axis, which is conducive to entry and deflection of the edge light and can reduce a desired deflection angle of the rear lens, thereby allowing the deflection angle of light on each lens to be more uniform, and effectively correcting the aberration of the edge field of view. The third lens has refractive power, the object side surface of the third lens is convex near the optical axis, and the image side surface of the third lens is concave near the optical axis, which is favorable for delaying the light entering the system via the front lens and delaying the angle. The fourth lens has negative refractive power, the object side surface of the fourth lens is concave near the optical axis, and the image side surface of the fourth lens is convex near the optical axis, which is favorable for correcting the spherical aberration, coma, and distortion generated by the first lens, second lens, and third lens. The fifth lens has positive refractive power, and the object side surface of the fifth lens is convex near the optical axis, which is favorable for reasonably constraining curvature radius of the fifth lens, thereby reducing tolerance sensitivity of the optical system, and reducing the risk of generation of stray light. The sixth lens has negative refractive power, the object side surface of the sixth lens is convex near the optical axis, and the image side surface of the sixth lens is concave near the optical axis, which is favorable for shortening the total length of the optical system, correcting aberrations, increasing an emitting angle of light to allow the optical system to have the characteristics of a large image surface, and improving the resolution of the optical system, thereby allowing the optical system to have better imaging quality.

By satisfying the relational expression: 1.9<FNO<2.3, the optical system may have the characteristics of a large aperture, and the optical system may have sufficient amount of incident light. Thus, the optical system may capture images with higher definition, and the optical system is suitable for photographing high quality images of low brightness space scenes such as night scenes and starry skies.

By satisfying the relationship expression: 85deg<FOV<100deg, the optical system may have a large field of view. Thus, the optical system may have the characteristics of high pixels and high definition.

By satisfying the relationship expression: 1.1<TTL/ImgH<1.4, the total optical length of the optical system may be reduced. Thus, the optical system may have ultra-thin characteristics, meet a requirement of miniaturization of the optical system, and have more advantages when shooting scenes at medium focus distances.

In a second aspect, the present application further provides a camera module. The lens module includes a photosensitive chip and the optical system mentioned in any one of embodiments of the first aspect, and the photosensitive chip is located on an image side of the optical system. A photosensitive surface of the photosensitive chip is located on an imaging surface of the optical system. The light of an object that passes through the lens and is incident on the photosensitive surface can be converted into an electrical signal of an image. The photosensitive chip may be a complementary metal oxide semiconductor (CMOS) or a charge-coupled device (CCD). The camera module can be an imaging module integrated in an electronic device or an independent lens. By adding the optical system provided by the present application to the camera module, a surface shape and refractive power of each lens in the optical system can be reasonably designed, so that the camera module can meet the requirements of large aperture, miniaturization, and good imaging effect.

In a third aspect, the present application further provides an electronic device. The electronic device includes a housing and the camera module mentioned in the second aspect, and the camera module is located in the housing. The electronic device includes but is not limited to an automobile, a monitor, a smart phone, a computer, and a smart watch. By adding the camera module provided by the present application to the electronic device, the electronic device can meet the requirements of large aperture, miniaturization, and good imaging effect.

### BRIEF DESCRIPTION OF THE DRAWINGS

Implementations of the present technology will now be described, by way of embodiment, with reference to the attached figures. Obviously, the drawings are only some embodiments of the present disclosure. For those ordinary skill in the art, other drawings can be obtained based on these drawings without creative work.
FIG. 1A is a schematic diagram of an optical system according to a first embodiment.
FIG. 1B shows a longitudinal spherical aberration diagram, an astigmatism diagram, and a distortion diagram of the optical system of the first embodiment of the present application.
FIG. 2A is a schematic diagram of an optical system according to a second embodiment.
FIG. 2B shows a longitudinal spherical aberration diagram, an astigmatism diagram, and a distortion diagram of the optical system of the second embodiment of the present application.
FIG. 3A is a schematic diagram of an optical system according to a third embodiment.
FIG. 3B shows a longitudinal spherical aberration diagram, an astigmatism diagram, and a distortion diagram of the optical system of the third embodiment of the present application.
FIG. 4A is a schematic diagram of an optical system according to a fourth embodiment.
FIG. 4B shows a longitudinal spherical aberration diagram, an astigmatism diagram, and a distortion diagram of the optical system of the fourth embodiment of the present application.
FIG. 5A is a schematic diagram of an optical system according to a fifth embodiment.
FIG. 5B shows a longitudinal spherical aberration diagram, an astigmatism diagram, and a distortion diagram of the optical system of the fifth embodiment of the present application.
FIG. 6A is a schematic diagram of an optical system according to a sixth embodiment.
FIG. 6B shows a longitudinal spherical aberration diagram, an astigmatism diagram, and a distortion diagram of the optical system of the sixth embodiment of the present application.
FIG. 7 is a schematic diagram of a camera module according to an embodiment the present application.
FIG. 8 is a schematic diagram of an electronic device according to an embodiment of the present application.

### DETAILED DESCRIPTION

Implementations of the present disclosure will now be described, by way of embodiments, with reference to the above figures. The embodiments are obviously a portion but not all of the embodiments of the present application. Based on the embodiments of the present application, other embodiments obtained by ordinary skill in the art without creative work will still fall within the scope of protection of the present application.

In a first aspect, the present application provides an optical system. The optical system consists of six lenses having refractive power. From an object side to an image side along an optical axis, the six lenses sequentially include a first lens, a second lens, a third lens, a fourth lens, a fifth lens, and a sixth lens. The first lens has positive refractive power, and an object side surface and an image side surface of the first lens are convex near the optical axis. The second lens has negative refractive power, and an image side surface of the second lens is concave near the optical axis. The third lens has refractive power, an object side surface of the third lens is convex near the optical axis, and an image side surface of the third lens is concave near the optical axis. The fourth lens has negative refractive power, an object side surface of the fourth lens is concave near the optical axis, and an image side surface of the fourth lens is convex near the optical axis. The fifth lens has positive refractive power, and an object side surface of the fifth lens is convex near the optical lens. The sixth lens has negative refractive power, an object side surface of the sixth lens is convex near the optical axis, and an image side surface of the sixth lens is concave near the optical axis.

The optical system satisfies the relational expression: 1.9<FNO<2.3. Further, the optical system satisfies the relational expression: 2<FNO<2.2. Wherein, FNO is an aperture number of the optical system.

The optical system satisfies the relational expression: 85deg<FOV<100deg. Further, the optical system satisfies the relational expression: 877deg<FOV<95deg. Wherein, FOV is a maximum field of view of the optical system.

The optical system satisfies the relational expression: 1.1<TTL/ImgH<1.4. Further, the optical system satisfies the relational expression: 1.22<TTL/ImgH<1.35. Wherein, ImgH is half of an image height corresponding to a maximum field of view of the optical system.

The first lens has positive refractive power, and the object side surface and image side surface of the first lens are both convex near the optical axis, which is favorable for shortening a total optical length of the optical system, compressing light direction of respective field of view, and reducing spherical aberration, thereby satisfying requirements of high image quality and small size of the optical system. It is also beneficial for improving the positive refractive power of the first lens so as to further provide a reasonable incident angle of light to guide the edge light. The second lens has negative refractive power, and the image side surface of the second lens is concave near the near optical axis, which is conducive to entry and deflection of the edge light and may reduce a desired deflection angle of the rear lens, thereby allowing the deflection angle of light on each lens to be more uniform, and effectively correcting the aberration of the edge field of view. The third lens has refractive power, the object side surface of the third lens is convex near the optical axis, and the image side surface of the third lens is concave near the optical axis, which is favorable for delaying the light entering the system via the front lens and delaying the angle. The fourth lens has negative refractive power, the object side surface of the fourth lens is concave near the optical axis, and the image side surface of the fourth lens is convex near the optical axis, which is favorable for correcting the spherical aberration, coma, and distortion generated by the first lens, second lens, and third lens. The fifth lens has positive refractive power, and the object side surface of the fifth lens is convex near the optical axis, which is favorable for reasonably constraining curvature radius of the fifth lens, thereby reducing tolerance sensitivity of the optical system, and reducing the risk of generation of stray light. The sixth lens has negative refractive power, the object side surface of the sixth lens is convex near the optical axis, and the image side surface of the sixth lens is concave near the optical axis, which is favorable for shortening the total length of the optical system, correcting aberrations, increasing a light emitting to allow the optical system to have the characteristics of a large image surface, and improving the resolution of the optical system, thereby allowing the optical system to have better imaging quality.

By satisfying the relational expression: 1.9<FNO<2.3, the optical system may have the characteristics of a large aperture, and the optical system may have sufficient amount of incident light. Thus, the optical system can capture images with higher definition, and the optical system is suitable for photographing high quality images of low brightness space scenes such as night scenes and starry skies.

By satisfying the relationship expression: 85deg<FOV<100deg, the optical system may have a large field of view. Thus, the optical system may have the characteristics of high pixels and high definition.

By satisfying the relationship expression: 1.1<TTL/ImgH<1.4, the total optical length of the optical system may be reduced. Thus, the optical system may have ultra-thin characteristics, meet the requirement of miniaturization of the optical system, and have more advantages when shooting scenes at medium focus distances.

In one embodiment, the optical system satisfies the relational expression: 0.5<R11/f<1.1. Further, the optical system satisfies the relational expression: 0.6<R11/f<1. Wherein, R11 is a radius of curvature of an object side surface of the first lens at the optical axis, and f is an effective focal length of the optical system. By satisfying the above relational expression, the ratio of the radius of curvature of the object side surface of the first lens at the optical axis to the effective focal length of the optical system may be reasonably limited, which is favorable for controlling the curvature of the first lens within a reasonable range and reduce an incident angle of light on the object side surface of the first lens. Thus, the optical system may have good imaging quality.

In one embodiment, the optical system satisfies the relational expression: -1.1<R12/f<-0.5. Further, the optical system satisfies the relational expression: -1<R12/f<-0.6. Wherein, R12 is a radius of curvature of an image side surface of the first lens at the optical axis, and f is the effective focal length of the optical system. By satisfying the above relational expression, a ratio of the curvature radius of the image side surface of the first lens at the optical axis and the effective focal length of the optical system may be reasonably limited, so that a surface shape of the object side surface of first lens and a surface shape of the image side surface of the first lens are matched to quickly converge the light, thereby reducing an aperture of a head of the optical system and realizing miniaturization of the head of the optical system.

In one embodiment, the optical system satisfies the relational expression: 5<|R21|/f. Further, the optical system satisfies the relational expression: 7<|R21|/f. Wherein, R21 is the radius of curvature of the object side surface of the second lens at the optical axis, and f is the effective focal length of the optical system. By satisfying the above relational expression, a ratio of the radius of curvature of the object side surface of the second lens at the optical axis to the effective focal length of the optical system may be reasonably limited, which is favorable for extending the propagation distance of light in a small aperture so as to further improve the degree of miniaturization of the head of the optical system.

In one embodiment, the optical system satisfies the relational expression: 0.6<R22/f<1.3. Further, the optical system satisfies the relational expression: 0.77<R22/f<1.2. Wherein, R22 is the radius of curvature of the image side surface of the second lens at the optical axis, and f is the effective focal length of the optical system. By satisfying the above relational expression, a ratio of the radius of curvature of the image side surface of the second lens at the optical axis to the effective focal length of the optical system may be reasonably limited, so that the light may diffuse smoothly toward the image side, thereby avoiding introduction of large off-axis chromatic aberration. Thus, the imaging quality may be improved.

In one embodiment, the optical system satisfies the relational expression: 0.5<R31/f<1.2. Further, the optical system satisfies the relational expression: 0.6<R31/f<1.1. Wherein, R31 is a radius of curvature of an object side surface of the third lens at the optical axis, and f is the effective focal length of the optical system. By satisfying the above relational expression, the ratio of the radius of curvature of the object side surface of the third lens at the optical axis to the effective focal length of the optical system may be reasonably limited, so that the astigmatism of the third lens may be controlled within a reasonable range, thereby effectively balancing the astigmatism. Thus, the optical system may have good imaging quality.

In one embodiment, the optical system satisfies the relational expression: 0.6<R32/f<1.2. Further, the optical system satisfies the relational expression: 0.7<R32/f<1.1. Wherein, R32 is a radius of curvature of the image side surface of the third lens at the optical axis, and f is the effective focal length of the optical system. By satisfying the above relational expression, the object side surface and the image side surface of the third lens are similar in shape, thereby avoiding the introduction of on-axis aberrations, facilitating the flexible design of aspheric surfaces, and balancing off-axis aberrations. Thus, the imaging quality may be improved.

In one embodiment, the optical system satisfies the relational expression: -1<R41/f<-0.3. Further, the optical system satisfies the relational expression: -0.9<R41/f<-0.35. Wherein, R41 is a radius of curvature of the object side surface of the fourth lens at the optical axis, and f is the effective focal length of the optical system. By satisfying the above relational expression, the ratio of the radius of curvature of the object side surface of the fourth lens at the optical axis to the effective focal length of the optical system may be reasonably limited, so that the astigmatism of the fourth lens may be controlled within a reasonable range, and the incident angle of light on the image side surface of the fourth lens may be reduced. Thus, the optical system may have good imaging quality.

In one embodiment, the optical system satisfies the relational expression: -2.1<R42/f<-0.4. Further, the optical system satisfies the relational expression: -1.9<R42/f<-0.5. Wherein, R42 is a radius of curvature of the image side surface of the fourth lens at the optical axis, and f is the effective focal length of the optical system. By satisfying the above relational expression, the ratio of the radius of curvature of the image side surface of the fourth lens at the optical axis to the effective focal length of the optical system may be reasonably limited, so that the incident angle of the light on the image side surface of the fourth lens may be reduced, the on-axis back focus may be reduced, and the total length of the optical system may be shortened. Thus, the optical system may be miniaturized.

In one embodiment, the optical system satisfies the relational expression: 0.2<R51/f<0.8. Further, the optical system satisfies the relational expression: 0.3<R51/f<0.7. Wherein, R51 is a radius of curvature of the object side surface of the fifth lens at the optical axis, and f is the effective focal length of the optical system. By satisfying the above relational expression, the ratio of the radius of curvature of the object side surface of the fifth lens at the optical axis to the effective focal length of the optical system may be reasonably limited, further reducing the on-axis back focus, and shortening the total length of the optical system. Thus, the optical system may be miniaturized.

In one embodiment, the optical system satisfies the relationship: 2.5<|R52|/f; further, the optical system satisfies the relationship: 3<|R52|/f<30. Wherein, R52 is the radius of curvature of the image side surface of the fifth lens at the optical axis, and f is the effective focal length of the optical system. By satisfying the above relational expression, the ratio of the radius of curvature of the image side surface of the fifth lens at the optical axis to the effective focal length of the optical system may be reasonably limited, so that the fifth lens may effectively balance the astigmatism generated by the first lens to the fourth lens. Thus, the optical system may have good imaging quality.

In one embodiment, the optical system satisfies the relational expression: 0.2<R61/f<0.7. Further, the optical system satisfies the relational expression: 0.3<R61/f<0.6. Wherein, R61 is a radius of curvature of the object side surface of the sixth lens at the optical axis, and f is the effective focal length of the optical system. By satisfying the above relationship, the ratio of the radius of curvature of the object side surface of the sixth lens at the optical axis to the effective focal length of the optical system may be reasonably limited, which may allow the sixth lens to gently receive incident light, thereby reducing the introduction of aberrations. Thus, the optical system may have good imaging quality.

In one embodiment, the optical system satisfies the relational expression: 0.1<R62/f<0.35. Further, the optical system satisfies the relational expression: 0.15<R62/f<0.35. Wherein, R62 is a radius of curvature of the image side surface of the sixth lens at the optical axis, and f is the effective focal length of the optical system. By satisfying the above relationship, the ratio of the radius of curvature of the image side surface of the sixth lens at the optical axis to the effective focal length of the optical system may be reasonably limited, which may allow light to be gently emitted by the sixth lens, thereby reducing the introduction of aberrations. Thus, the optical system may have good imaging quality.

In one embodiment, the optical system satisfies the relational expression: 1<|R32/R41|<2. Further, the optical system satisfies the relational expression: 1<|R32/R41|<1.9. Wherein, R32 is a radius of curvature of the image side surface of the third lens at the optical axis, and R41 is the radius of curvature of the object side surface of the fourth lens at the optical axis. By satisfy the above relational expression, the ratio of the radius of curvature of the image side surface of the third lens at the optical axis to the radius of curvature of the object side surface of the fourth lens at the optical axis may be reasonably limited, which may control the spacing change of a gap between the third lens and the fourth lens, reduce the sensitivity of the third lens and the fourth lens during the production process, and balance the spherical chromatic aberration of the optical system. Thus, the imaging quality of the optical system may be improved.

In one embodiment, the optical system satisfies the relational expression: 0.3<|(R61+R62)/f6|<0.8. Further, the optical system satisfies the relational expression: 0.4<|(R61+R62)/f6|<0.7. Wherein, R61 is a radius of curvature of the object side surface of the sixth lens at the optical axis, R62 is a radius of curvature of the image side surface of the sixth lens at the optical axis, and f6 is the effective focal length of the sixth lens. By satisfying the above relational expression, the ratio of the sum of the radii of curvature of the object side surface and the image side surface of the sixth lens at the optical axis to the effective focal length of the sixth lens may be reasonably limited, so that the astigmatism of the sixth lens is controlled within a reasonable range, effectively balancing the astigmatism generated by the first lens to the fifth lens, and improving the imaging quality of the optical system.

In one embodiment, the optical system satisfies the relational expression: 0.6<f1/f<0.9. Further, the optical system satisfies the relational expression: 0.65<f1/f<0.85. Wherein, f1 is the effective focal length of the first lens, and f is the effective focal length of the optical system. By satisfying the above relationship, the ratio of the effective focal length of the first lens to the effective focal length of the optical system may be reasonably limited. For the entire optical system, the refractive power of the first lens will not be too strong, thereby avoiding the introduction of excessive spherical aberration. Thus, the optical system may have good imaging quality.

In one embodiment, the optical system satisfies the relational expression: -1.6<f2/f<-1. Further, the optical system satisfies the relational expression: -1.5<f2/f<-1.1. Wherein, f2 is the effective focal length of the second lens, and f is the effective focal length of the optical system. By satisfying the above relationship, the ratio of the effective focal length of the second lens to the effective focal length of the optical system may be reasonably limited. For the entire optical system, the refractive power of the second lens will not be too strong, and the second lens may cooperate with the first lens to correct spherical aberration, so that the optical system may have good imaging quality.

In one embodiment, the optical system satisfies the relational expression: 7<|f3|/f. Further, the optical system satisfies the relational expression: 9<|f3|/f<50. Wherein, f3 is the effective focal length of the third lens, and f is the effective focal length of the optical system. By satisfying the above relational expression, the ratio of the effective focal length of the third lens to the effective focal length of the optical system may reasonably limited, so that the spherical aberration and chromatic aberration may be further corrected. Thus, the optical system may have good imaging quality.

In one embodiment, the optical system satisfies the relational expression: -7<f4/f<-1. Further, the optical system satisfies the relational expression: -7<f4/f<-1.1. Wherein, f4 is the effective focal length of the fourth lens, and f is the effective focal length of the optical system. By satisfying the above relational expression, the ratio of the effective focal length of the fourth lens to the effective focal length of the optical system may be reasonably limited, so that the light may be gently diffused, the pressure of the subsequent lens to correct the aberration may be reduced, and the imaging quality may be improved.

In one embodiment, the optical system satisfies the relational expression: 0.5<f5/f<1.2. Further, the optical system satisfies the relational expression: 0.6<f5/f<1.1. Wherein, f5 is the effective focal length of the fifth lens, and f is the effective focal length of the optical system. By satisfying the above relational expression, the ratio of the effective focal length of the fifth lens to the effective focal length of the optical system may be reasonably limited. For the entire optical system, too large curvature of the surface shape caused by overload of the sixth lens may be avoided, so that the optical system has good imaging quality.

In one embodiment, the optical system satisfies the relational expression: -1.6<f6/f<-1. Further, the optical system satisfies the relational expression: -1.5<f6/f<-1.1. Wherein, f6 is the effective focal length of the sixth lens, and f is the effective focal length of the optical system. By satisfying the above relational expression, the ratio of the effective focal length of the sixth lens to the effective focal length of the optical system may be reasonably limited. For the entire optical system, the refractive power of the sixth lens may be appropriate, and the sixth lens may cooperate with the fifth lens to correct optical aberration, so that the optical system may have good imaging quality.

In one embodiment, the optical system satisfies the relational expression: 2<FNO*tan(HFOV)<2.4. Further, the optical system satisfies the relational expression: 2.1<FNO*tan(HFOV)<2.3. Wherein, FNO is the aperture number of the optical system, and HFOV is half of the maximum field of view of the optical system. By satisfying the above relational expression, the aperture number of the optical system and the maximum field of view of the optical system may be reasonably limited, so that the optical system may have the characteristics of a large aperture and large field of view, thereby improving clarity of the pixels and imaging surface of the optical system. Thus, the optical system may have better imaging quality.

In one embodiment, the optical system satisfies the relational expression: 3.8<f/SD11<4.5. Further, the optical system satisfies the relational expression: 4<f/SD11<4.3. Wherein, f is the effective focal length of the optical system, and SD11 is the maximum effective aperture of the object side surface of the first lens. By satisfying the above relational expression, the ratio of the effective focal length of the optical system to the maximum effective aperture of the object side surface of the first lens may be reasonably limited, that is, the relative amount of light entering the optical system may be kept within a reasonable range, and a large entrance pupil aperture may be achieved while satisfying small aperture of the first lens, thereby reducing the aperture number of the optical system. Thus, the amount of light entering the optical system may be improved, and a miniaturized design of the head of may be realized, so that the optical system may be more suitable for applications in under-screen cameras and low light scenes. When it is below the lower limit, the aperture of the first lens is too large, which is not conducive to miniaturization of the head. When it exceeds the upper limit, the amount of incident light is too small, and the image quality is poor under low light conditions.

In one embodiment, the optical system satisfies the relational expression: 1.1<CT1/SD11<1.4. Further, the optical system satisfies the relational expression: 1.1<CT1/SD11<1.3. Wherein, CT1 is a thickness of the first lens at the optical axis, and SD11 is the maximum effective aperture of the object side surface of the first lens. By satisfying the above relational expression, the first lens may satisfy the miniaturized design of the head, which is very suitable for applications in under-screen cameras and low light scenes. When it is below the lower limit, the aperture of the first lens is relatively large, which is not conducive to achieving a miniaturized design of the head. When it exceeds the upper limit, the thickness difference between a bearing area and an optical effective area is too large, which may result in a large thickness ratio of the lens to increase the manufacturing difficulty and is not conducive to improving yield.

In one embodiment, the optical system satisfies the relational expression: 0.6<ET1/CT1<0.9. Further, the optical system satisfies the relational expression: 0.65<ET1/CT1<0.8. Wherein, ET1 is a distance from a position where the object side surface of the first lens has the maximum effective aperture to a position where the image side surface of the first lens has the maximum effective aperture along the optical axis, and CT1 is a thickness of the first lens at the optical axis. By satisfying the above relational expression, the thickness and refractive power of the first lens in the direction perpendicular to the optical axis may be reasonably distributed. The first lens is a convex lens with a thick center and thin sides, and has positive refractive power, which may allow the first lens to shrink the incident light, thereby reducing the total optical length. Optionally, 0.82mm<CT1<0.86mm, the first lens may have a large edge thickness, which may allow the optical system to achieve a deeper head structure while meeting the requirements of a small head structure, so that the optical system may be suitable for shooting scenes with holes, such as full screen screens and under-screen cameras. When it is below the lower limit, the edge thickness of the first lens may small, and the depth of the head structure of the optical system may small, which cannot meet specific requirements of head depth. When it exceeds the upper limit, the refractive power of the first lens may be relatively small, making which cannot provide good deflection conditions for incident light and is not conducive to the contraction of light.

In one embodiment, the optical system satisfies the relational expression: 1<CT5/ET5<1.8. Further, the optical system satisfies the relational expression: 1.1<CT5/ET5<1.65. Wherein, CT5 is a thickness of the fifth lens at the optical axis, and ET5 is a distance from a position where the object side surface of the fifth lens has the maximum effective aperture to a position where the image side surface of the fifth lens has the maximum effective aperture along the optical axis. By satisfying the above relational expression, the edge thickness and center thickness of the fifth lens may be reasonably limited, the shape of the fifth lens may be controlled, and the spherical aberration, chromatic aberration, and field curvature of the optical system may be comprehensively balanced, and the imaging quality of the optical system may be improved.

In one embodiment, the optical system satisfies the relational expression: 0.8<ET6/CT6<1.3. Further, the optical system satisfies the relational expression: 0.85<ET6/CT6<1.2. Wherein, ET6 is a distance from a position where the object side surface of the sixth lens has the maximum effective aperture to a position where the image side surface of the sixth lens has the maximum effective aperture along the optical axis, and CT6 is a thickness of the sixth lens at the optical axis. By satisfying the above relational expression, the overall thickness of the sixth lens may be similar, so that the rear space of the optical system may be reasonably used, and manufacturing difficulty may be reduced. When it is below the lower limit, the proportion of edge thickness of the sixth lens may be small, and the supporting part is difficult to meet the thickness standard. When it exceeds the upper limit, the thickness of the sixth lens may be too large, which may cause the external support part to occupy too much space.

In one embodiment, the optical system satisfies the relational expression: 1<CT5/CT6<1.8. Furthe, the optical system satisfies the relational expression: 1<CT5/CT6<1.7. Wherein, CT5 is a thickness of the fifth lens at the optical axis, and CT6 is a thickness of the sixth lens at the optical axis. By satisfying the above relational expression, the distance between the fifth lens and the sixth lens may be reduced, which may improve compactness and may be conductive to the miniaturization of the optical system.

In one embodiment, the optical system satisfies the relational expression: 3<TD/CT1<4. Further, the optical system satisfies the relational expression: 3.3<TD/CT1<3.9. Wherein, TD is a distance from the object side surface of the first lens to the image side surface of the sixth lens along the optical axis, and CT1 is a thickness of the first lens at the optical axis. By satisfying the above relational expression, the miniaturized design of the head of the optical system may be satisfied to allow the thickness of the first lens to be matched with the optical system, which is favorable for reducing the sensitivity of the first lens, simplifying the processing and molding of the first lens, and achieving better engineering manufacturing.

In one embodiment, the optical system satisfies the relational expression: 0.5<AT56/AT23<1.8. Furthe, the optical system satisfies the relational expression: 0.6<AT56/AT23<1.7. Wherein, AT56 is a distance from the image side surface of the fifth lens to the object side surface of the sixth lens along the optical axis, and AT23 is a distance from the image side surface of the second lens to the object side surface of the third lens along the optical axis. By satisfying the above relational expression, the sensitivity of the second lens, third lens, fifth lens, and sixth lens may be reduced, the processing and molding of the second lens, third lens, fifth lens, and sixth lens may be simplified, and engineering manufacturing may be better achieved.

In one embodiment, the optical system satisfies the relational expression: 1<AT34/AT23<1.6. Further, the optical system satisfies the relational expression: 1<AT34/AT23<1.5. Wherein, AT23 is a distance from the image side surface of the second lens to the object side surface of the third lens along the optical axis, and AT34 is a distance from the image side surface of the third lens to the object side surface of the fourth lens along the optical axis. By satisfying the above relational expression, the sensitivity of the second lens, third lens, and fourth lens may be reduced, the processing and molding of the second lens, third lens, and fourth lens may be simplified, and engineering manufacturing may be better achieved.

In one embodiment, the optical system satisfies the relational expression: 4<T56max/T56min<11. Wherein, T56max is the maximum distance parallel to the optical axis between the fifth lens and the sixth lens, and T56min is the minimum distance parallel to the optical axis between the fifth lens and the sixth lens. By satisfying the above relational expression, a ratio of the maximum distance parallel to the optical axis between the fifth and sixth lenses to the minimum distance parallel to the optical axis between the fifth and sixth lenses may be reasonably limited, so that sizes and refractive powers of the fifth and sixth lenses may be reasonably limited, and the degree of curvature of the fifth and sixth lenses may be maintained within a reasonable range, thereby effectively reducing the astigmatism generated by the fifth and sixth lenses, reducing the overall sensitivity of the optical system, and facilitating the production and manufacturing of the fifth and sixth lenses.

In one embodiment, the optical system satisfies the relational expression: 0.2<(SAG11+SAG21)/TTL<0.3. Wherein, SAG11 is a distance from an intersection point of the object side surface of the first lens and the optical axis to a position where the image side surface of the first lens has the maximum effective aperture of along the optical axis, SAG21 is a distance from an intersection point of the object side surface of the second lens and the optical axis to a position where the image side surface of the second lens has the maximum effective aperture of along the optical axis, and TTL is a distance from the object side surface of the first lens to the imaging surface of the optical system along the optical axis. By satisfying the above relational expression, the thicknesses of the first and second lenses may be reasonably controlled, that is, a structural proportion of the thicker first and second lenses in the optical system may be controlled, thereby effectively reducing the total optical length of the optical system and achieving miniaturization.

In one embodiment, the optical system satisfies the relational expression: 4<L42/(W4+V4)<5. Wherein, L42 is half of the maximum effective aperture of the image side surface of the fourth lens, W4 is half of the maximum thickness of the fourth lens, and V4 is half of the minimum thickness of the fourth lens. By satisfying the above relational expression, the curvature of the fourth lens may be reasonably limited, which is favorable for balancing the aberrations of the optical system, reducing the sensitivity during the production process of the fourth lens, and improving the imaging quality of the optical system. When it is below the lower limit, the sensitivity during the production process of the fourth lens may be increased, which is not conducive to the production and manufacturing of the fourth lens. When it exceeds the upper limit, the fourth lens may be difficult to correct the field curvature aberration of the optical system, which affects the imaging quality of the optical system.

In one embodiment, the optical system satisfies the relational expression: 4<L62/(W6+V6)<6. Wherein, L62 is half of the maximum effective aperture of the image side surface of the sixth lens, W6 is half of the maximum thickness of the sixth lens, and V6 is half of the minimum thickness of the sixth lens. By satisfying the above relational expression, the curvature of the sixth lens may be reasonably limited, which is favorable for balancing the aberrations of the optical system, reducing the sensitivity during the production process of the sixth lens, and improving the imaging quality of the optical system. When it is below the lower limit, the sensitivity during the production process of the sixth lens may be increased, which is not conducive to the production and manufacturing of the sixth lens. When it exceeds the upper limit, the sixth lens may be difficult to correct the field curvature aberration of the optical system, which affects the imaging quality of the optical system.

In some embodiments, the optical system further includes an optical filter. The optical filter may be an infrared cut-off filter or an infrared bandpass filter. The infrared cut-off filter is used to filter out infrared light. The infrared bandpass filter only allows infrared light to pass through. In this application, the optical filter is an infrared cut-off filter, which is fixedly arranged relative to each lens in the optical system and is configured to prevent infrared light from reaching the imaging surface of the optical system and interfering with normal imaging. The optical filter can be assembled with each lens as a part of the optical system. In other embodiments, the optical filter can also be an independent component of the optical system. The optical filter can be installed between the optical system and the photosensitive chip during the assembly of the optical system and the photosensitive chip. The optical filter may be made of optical glass with coating. The optical filter may also be made of colored glass. The optical filter may also be made of other materials, which are selected according to actual needs. In other embodiments, the filtering effect of infrared light can also be achieved by setting a filter coating on at least one of the first to sixth lenses.

### First embodiment

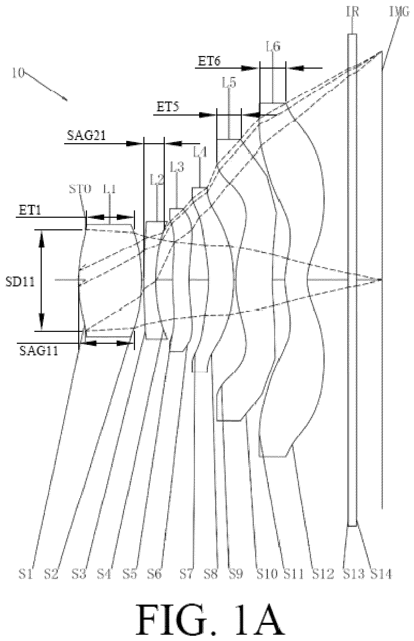

Referring to FIG. 1A, an optical system of the embodiment sequentially includes a first lens L1, a second lens L2, a third lens L3, a fourth lens L4, a fifth lens L5, and a sixth lens L6 from an object side to an image side along the optical axis.

The first lens L1 has positive refractive power, an object side surface S1 of the first lens L1 is convex near an optical axis, and an image side surface S2 of the first lens L1 is convex near the optical axis.

The second lens L2 has negative refractive power, an object side surface S3 of the second lens L2 is concave near the optical axis, and an image side surface S4 of the second lens L2 is concave near the optical axis.

The third lens L3 has negative refractive power, an object side surface S5 of the third lens L3 is convex near the optical axis, and an image side surface S6 of the third lens L3 is concave near the optical axis.

The fourth lens L4 has negative refractive power, and an object side surface S7 of the fourth lens L4 is concave near the optical axis, and an image side surface S8 of the fourth lens L4 is convex near the optical axis.

The fifth lens L5 has positive refractive power, an object side surface S9 of the fifth lens L5 is convex near the optical axis, and an image side surface S10 of the fifth lens L5 is convex near the optical axis.

The sixth lens L6 has negative refractive power, an object side surface S11 of the sixth lens L6 is convex near the optical axis, and an image side surface S12 of the sixth lens L5 is concave near the optical axis.

Moreover, the optical system also includes an aperture stop STO, an optical filter IR, and an imaging surface IMG. In this embodiment, the aperture stop STO is arranged on the object side surface of the first lens L1 and is configured to control the amount of incident light. The optical filter IR is arranged between the sixth lens L6 and the imaging surface IMG and includes an object side surface S13 and an image side surface S14. The optical filter IR is an infrared cut-off filter, which is used to filter out infrared light, so that the light entering the imaging surface IMG is visible light, and a wavelength of the visible light is in a range of 380 nm to 780 nm. The infrared cut-off filter may be made of glass or plastic, which can be coated thereon. The first lens L1 to the sixth lens L6 may be made of glass or plastic. An effective pixel area of the photosensitive chip is located on the imaging surface, and the photosensitive chip is set at the imaging surface IMG. The photosensitive chip captures different wavelength information of an object for subsequent processing.

Table 1a shows parameters of the optical system 10 of the embodiment. The Y radius in Table 1a is the radius of curvature of the object side surface or image side surface with the corresponding surface number at the optical axis. The surface numerals S1 and S2 are the object side surface S1 and image side surface S2 of the first lens L1, respectively. That is, for a same lens, the surface with a smaller surface numeral is the object side surface of the lens, and the surface with a larger surface is the image side surface of the lens. In a "thickness" column of the first lens L1, the first value is the thickness of the lens at the optical axis, and the second value is the distance from the image side surface of the lens to the next surface at the optical axis along a direction toward the image side. The focal length, material refractive index and Abbe number are obtained using visible light with a reference wavelength of 555 nm, and the units of the Y radius, thickness, and focal length are millimeters (mm).

**Table 1a**

| First embodiment | | | | | | | | |
|---|---|---|---|---|---|---|---|---|
| f=3.01mm, FNO=2.13, FOV=92.1deg, TTL=4.1mm | | | | | | | | |
| Surface numeral | Surface name | Surface type | Y radius (mm) | Thickness (mm) | Material | refractive index | Abbe number | Focal length |
| | object side | sphere | infinity | infinity | | | | |
| STO | aperture stop | sphere | infinity | -0.089 | | | | |
| S1 | L1 | asphere | 2.159 | 0.854 | plastic | 1.545 | 56.037 | 2.125 |
| S2 | | asphere | -2.148 | 0.031 | | | | |
| S3 | L2 | asphere | -64.854 | 0.159 | plastic | 1.673 | 19.239 | -3.452 |
| S4 | | asphere | 2.414 | 0.226 | | | | |
| S5 | L3 | asphere | 2.900 | 0.224 | plastic | 1.589 | 28.364 | -114.619 |
| S6 | | asphere | 2.701 | 0.263 | | | | |
| S7 | L4 | asphere | -1.831 | 0.340 | plastic | 1.589 | 28.364 | -12.533 |
| S8 | | asphere | -2.603 | 0.030 | | | | |
| S9 | L5 | asphere | 1.634 | 0.493 | plastic | 1.545 | 56.037 | 2.939 |
| S10 | | asphere | -73.230 | 0.167 | | | | |
| S11 | L6 | asphere | 1.078 | 0.300 | plastic | 1.536 | 55.685 | -3.621 |
| S12 | | asphere | 0.626 | 0.556 | | | | |
| S13 | IR | sphere | infinity | 0.110 | glass | | | |
| S14 | | sphere | infinity | 0.346 | | | | |
| IMG | imaging surface | sphere | infinity | 0.000 | | | | |

Wherein, f is the focal length of the optical system 10, FNO is the aperture number of the optical system 10, FOV is the maximum field of view of the optical system 10. TTL is the distance from the object side surface of the first lens to the imaging surface along the optical axis, that is the total optical length.

In this embodiment, object side surfaces and the image side surfaces of the first lens L1 to the sixth lens L6 are all aspherical surfaces. The surface shape x of aspherical surface may be expressed by, but not limited to, the following aspherical formula:
$x = \frac{{ch}^{2}}{1 + \sqrt{1 - \left(k+1\right) {c}^{2} {h}^{2}}} + \sum {Aih}^{i}$

Wherein, x is a distance from a corresponding point of the aspherical surface to a plane tangent to the vertex, h is a distance from any point on the aspherical surface to the optical axis 101, c is a curvature of a vertex of the aspherical surface, k is cone constant, and Ai is a coefficient corresponding to the ith higher-order term in the above aspherical formula. Table 1b shows the coefficients of high-order terms A4, A6, A8, A10, A12, A14, A16, A18, A20, A22, A24, A26, A28, A30 of the aspheric mirrors S1, S2, S3, S4, S5, S6, S7, S8, S9, S10, S11, S12 that can be used in the first embodiment.

**Table 1b**

| Surface numeral | S1 | S2 | S3 | S4 | S5 | S6 |
|---|---|---|---|---|---|---|
| k | -7.0801E+00 | -9.2072E+00 | -9.9000E+01 | -4.3860E+00 | -1.2248E+01 | -1.0581E+01 |
| A4 | -7.1694E-03 | 2.6375E-01 | 1.1438E-01 | 1.2907E-02 | -3.0786E-01 | -2.8546E-01 |
| A6 | 8.1802E-01 | -3.0943E+00 | 2.4063E-01 | 8.1510E-02 | 2.5514E+00 | 2.8724E+00 |
| A8 | -1.1193E+01 | 1.6848E+01 | -8.7298E+00 | 2.3450E+00 | -3.2447E+01 | -2.9009E+01 |
| A10 | 8.1231E+01 | -6.8795E+01 | 8.0912E+01 | -4.4627E+01 | 2.7409E+02 | 1.8745E+02 |
| A12 | -3.6356E+02 | 1.9923E+02 | -4.5526E+02 | 3.8270E+02 | -1.6347E+03 | -8.8811E+02 |
| A14 | 1.0114E+03 | -3.8707E+02 | 1.7401E+03 | -2.0012E+03 | 7.0404E+03 | 3.1735E+03 |
| A16 | -1.7029E+03 | 4.7578E+02 | -4.7031E+03 | 7.0006E+03 | -2.2084E+04 | -8.5666E+03 |
| A18 | 1.5879E+03 | -3.3302E+02 | 9.1474E+03 | -1.7057E+04 | 5.0583E+04 | 1.7347E+04 |
| A20 | -6.2919E+02 | 1.0085E+02 | -1.2851E+04 | 2.9399E+04 | -8.4259E+04 | -2.6033E+04 |
| A22 | 0.0000E+00 | 0.0000E+00 | 1.2924E+04 | -3.5754E+04 | 1.0072E+05 | 2.8396E+04 |
| A24 | 0.0000E+00 | 0.0000E+00 | -9.0709E+03 | 3.0035E+04 | -8.4026E+04 | -2.1798E+04 |
| A26 | 0.0000E+00 | 0.0000E+00 | 4.2200E+03 | -1.6591E+04 | 4.6391E+04 | 1.1128E+04 |
| A28 | 0.0000E+00 | 0.0000E+00 | -1.1693E+03 | 5.4242E+03 | -1.5217E+04 | -3.3824E+03 |
| A30 | 0.0000E+00 | 0.0000E+00 | 1.4609E+02 | -7.9539E+02 | 2.2436E+03 | 4.6181E+02 |

| Surface numeral | S7 | S8 | S9 | S10 | S11 | S12 |
|---|---|---|---|---|---|---|
| K | -6.5657E+00 | -1.0100E-02 | -1.8133E+00 | -9.9000E+01 | -7.9699E+00 | -3.9710E+00 |
| A4 | 1.5418E-01 | -8.1558E-01 | -1.2794E-01 | 6.3866E+00 | -1.5851E+01 | -7.1741E+00 |
| A6 | 6.2930E-01 | 1.7224E+00 | -1.2013E+00 | -4.0850E+01 | 2.6764E+01 | 1.7634E+01 |
| A8 | 1.9898E+01 | 2.4118E+01 | -5.0125E+00 | 1.1419E+02 | -1.8802E+02 | 1.1967E+00 |
| A10 | -2.8000E+02 | -2.8562E+02 | 1.5638E+00 | -1.8831E+02 | 3.3741E+03 | -9.8097E+01 |
| A12 | 1.8290E+03 | 1.5248E+03 | 1.8047E+02 | 2.4493E+02 | -2.0198E+04 | 1.9613E+02 |
| A14 | -7.7282E+03 | -4.9330E+03 | -1.0974E+03 | -5.0418E+02 | 5.8631E+04 | -4.8504E+01 |
| A16 | 2.3144E+04 | 1.0258E+04 | 3.7026E+03 | 1.5112E+03 | -7.9066E+04 | -4.8091E+02 |
| A18 | -5.0776E+04 | -1.3326E+04 | -8.4402E+03 | -3.6481E+03 | -1.9623E+04 | 1.1781E+03 |
| A20 | 8.2135E+04 | 8.8409E+03 | 1.3562E+04 | 6.1744E+03 | 2.7451E+05 | -1.6689E+03 |
| A22 | -9.6790E+04 | 1.4648E+03 | -1.5316E+04 | -7.2256E+03 | -5.2060E+05 | 1.7033E+03 |
| A24 | 8.0591E+04 | -8.4920E+03 | 1.1846E+04 | 5.7443E+03 | 5.3483E+05 | -1.2720E+03 |
| A26 | -4.4769E+04 | 7.4595E+03 | -5.9532E+03 | -2.9637E+03 | -3.2793E+05 | 6.5032E+02 |
| A28 | 1.4833E+04 | -3.0321E+03 | 1.7469E+03 | 8.9518E+02 | 1.1335E+05 | -1.9976E+02 |
| A30 | -2.2101E+03 | 4.9628E+02 | -2.2674E+02 | -1.2011E+02 | -1.7101E+04 | 2.7444E+01 |

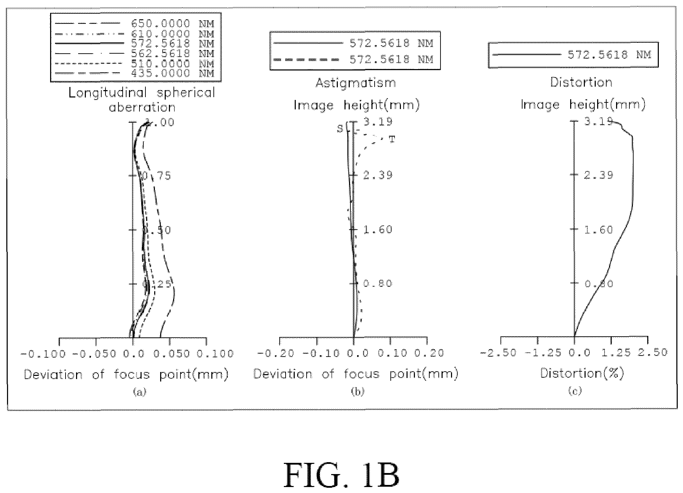

Referring to (a) of FIG. 1B, a longitudinal spherical aberration diagram of the optical system of the first embodiment at wavelengths of 572.5618 nm is shown. The horizontal coordinate along X-axis represents deviation of the focus point, which is the distance (in mm) from the imaging surface to the intersection of the light ray and the optical axis. The vertical coordinate along Y-axis represents the normalized field of view. The longitudinal spherical aberration curve represents deviations of converged focus points of light of different wavelengths after passing through each lens of the optical system10. From (a) of FIG. 1B, deviation degrees of converged focal points of light of different wavelengths tend to be the same, and the diffuse spot or chromatic halo in the imaged pictures is effectively prevented, which indicates that the imaging quality of the optical system 10 in this embodiment is good.

Referring to (b) of FIG. 1B, an astigmatism diagram of the optical system 10 of the first embodiment at a wavelength of 572.5618 nm is shown. The horizontal coordinate along X-axis represents deviation of the focus point, and the vertical coordinate along Y-axis represents the image height in mm. S curve of the astigmatism diagram represents the sagittal field curvature at 572.5618 nm, and T curve represents the meridian field curvature at 572.5618 nm. From (b) of FIG. 1B, the field curvature and astigmatism of each field of view are well corrected, and clear imaging can be achieved at the center and edges of the field of view.

Referring to (c) of FIG. 1B, a distortion diagram of the optical system 10 of the first embodiment at the wavelength of 572.5618 nm is shown. The horizontal coordinate along X-axis represents the distortion value, with the symbol of %. The vertical coordinate along Y-axis represents the image height in mm. The distortion curve represents the value of the distortion corresponding to different angles of field of view. From (c) of FIG. 1B, the image distortion caused by the main beam is small, and the imaging quality of the system is good at the wavelength of 572.5618 nm.

From (a), (b), and (c) of FIG. 1B, the optical system 10 of this embodiment has small aberrations and good imaging quality.

### Second embodiment

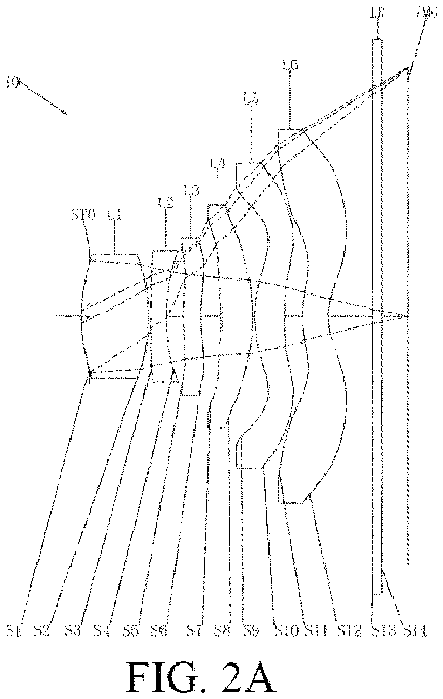

Referring to FIG. 2A, the optical system 10 of the embodiment sequentially includes the first lens L1, the second lens L2, the third lens L3, the fourth lens L4, the fifth lens L5, and the sixth lens L6 from an object side to an image side along the optical axis.

The first lens L1 has positive refractive power, an object side surface S1 of the first lens L1 is convex near an optical axis, and an image side surface S2 of the first lens L1 is convex near the optical axis.

The second lens L2 has negative refractive power, an object side surface S3 of the second lens L2 is convex near the optical axis, and an image side surface S4 of the second lens L2 is concave near the optical axis.

The third lens L3 has negative refractive power, an object side surface S5 of the third lens L3 is convex near the optical axis, and an image side surface S6 of the third lens L3 is concave near the optical axis.

The fourth lens L4 has negative refractive power, and an object side surface S7 of the fourth lens L4 is concave near the optical axis, and an image side surface S8 of the fourth lens L4 is convex near the optical axis.

The fifth lens L5 has positive refractive power, an object side surface S9 of the fifth lens L5 is convex near the optical axis, and an image side surface S10 of the fifth lens L5 is concave near the optical axis.

The sixth lens L6 has negative refractive power, an object side surface S11 of the sixth lens L6 is convex near the optical axis, and an image side surface S12 of the sixth lens L5 is concave near the optical axis.

The other structures of the optical system of the second embodiment are identical with the optical system of the second embodiment, reference can be made to the optical system of second embodiment.

Table 2a shows parameters of the optical system 10 of the embodiment. The focal length, material refractive index and Abbe number are obtained using visible light with a reference wavelength of 555 nm, the units of the Y radius, thickness, and focal length are millimeters (mm), and other parameters represent the same meaning as that in the first embodiment.

**Table 2a**

| second embodiment | | | | | | | | |
|---|---|---|---|---|---|---|---|---|
| f=3.09mm, FNO=2.13, FOV=90.5deg, TTL=4.14mm | | | | | | | | |
| Surface numeral | Surface name | Surface type | Y radius (mm) | Thickness (mm) | Material | refractive index | Abbe number | Focal length |
| | object side | sphere | infinity | infinity | | | | |
| STO | aperture stop | sphere | infinity | -0.100 | | | | |
| S1 | L1 | asphere | 2.089 | 0.850 | plastic | 1.546 | 56.114 | 2.316 |
| S2 | | asphere | -2.742 | 0.030 | | | | |
| S3 | L2 | asphere | 1992.145 | 0.195 | plastic | 1.678 | 19.244 | -3.942 |
| S4 | | asphere | 2.667 | 0.221 | | | | |
| S5 | L3 | asphere | 2.976 | 0.221 | plastic | 1.570 | 37.403 | -85.435 |
| S6 | | asphere | 2.728 | 0.260 | | | | |
| S7 | L4 | asphere | -2.642 | 0.387 | plastic | 1.607 | 28.341 | -20.940 |
| S8 | | asphere | -3.520 | 0.030 | | | | |
| S9 | L5 | asphere | 1.559 | 0.380 | plastic | 1.546 | 56.114 | 3.243 |
| S10 | | asphere | 11.948 | 0.229 | | | | |
| S11 | L6 | asphere | 1.333 | 0.320 | plastic | 1.537 | 55.751 | -3.754 |
| S12 | | asphere | 0.735 | 0.581 | | | | |
| S13 | IR | sphere | infinity | 0.110 | glass | | | |
| S14 | | sphere | infinity | 0.326 | | | | |
| IMG | imaging surface | sphere | infinity | 0.000 | | | | |

Wherein, f is the focal length of the optical system 10, FNO is the aperture number of the optical system 10, FOV is the maximum field of view of the optical system 10. TTL is the distance from the object side surface of the first lens to the imaging surface along the optical axis, that is the total optical length.

Table 2b shows the coefficients of high-order terms that can be used for each aspherical mirror surface in the second embodiment, wherein each aspherical surface shape can be defined by the formula provided in the first embodiment.

**Table 2b**

| Surface numeral | S1 | S2 | S3 | S4 | S5 | S6 |
|---|---|---|---|---|---|---|
| k | -6.5913E+00 | -4.7789E+00 | 9.9000E+01 | -2.8313E+00 | -1.6478E+01 | -1.1597E+01 |
| A4 | -6.8163E-02 | 1.6455E-01 | 1.7488E-01 | 3.1022E-02 | -1.9784E-02 | 1.8726E-01 |
| A6 | 2.5602E+00 | -3.1091E+00 | -1.1808E+00 | -6.0333E-01 | -6.0713E+00 | -5.5081E+00 |
| A8 | -4.0819E+01 | 3.9846E+01 | 1.2072E+01 | 1.2739E+01 | 8.6530E+01 | 4.6995E+01 |
| A10 | 3.8632E+02 | -3.7648E+02 | -1.2238E+02 | -1.2914E+02 | -8.2620E+02 | -2.7949E+02 |
| A12 | -2.3813E+03 | 2.4071E+03 | 8.6264E+02 | 8.3333E+02 | 5.4716E+03 | 1.0970E+03 |
| A14 | 1.0060E+04 | -1.0584E+04 | -4.1437E+03 | -3.7121E+03 | -2.5597E+04 | -2.5913E+03 |
| A16 | -3.0036E+04 | 3.2719E+04 | 1.3902E+04 | 1.1791E+04 | 8.5947E+04 | 2.2893E+03 |
| A18 | 6.4412E+04 | -7.2042E+04 | -3.3151E+04 | -2.7096E+04 | -2.0893E+05 | 6.4880E+03 |
| A20 | -9.9620E+04 | 1.1322E+05 | 5.6531E+04 | 4.5183E+04 | 3.6753E+05 | -2.8183E+04 |
| A22 | 1.1017E+05 | -1.2571E+05 | -6.8460E+04 | -5.4167E+04 | -4.6245E+05 | 5.2500E+04 |
| A24 | -8.4976E+04 | 9.6026E+04 | 5.7489E+04 | 4.5512E+04 | 4.0513E+05 | -5.8305E+04 |
| A26 | 4.3427E+04 | -4.7838E+04 | -3.1815E+04 | -2.5442E+04 | -2.3435E+05 | 3.9743E+04 |
| A28 | -1.3216E+04 | 1.3933E+04 | 1.0430E+04 | 8.4955E+03 | 8.0345E+04 | -1.5415E+04 |
| A30 | 1.8132E+03 | -1.7899E+03 | -1.5335E+03 | -1.2812E+03 | -1.2348E+04 | 2.6140E+03 |

| Surface numeral | S7 | S8 | S9 | S10 | S11 | S12 |
|---|---|---|---|---|---|---|
| K | -8.1838E+00 | -3.0028E+00 | -1.5464E+00 | 7.3730E+00 | -4.7980E+00 | -3.1726E+00 |
| A4 | 1.0976E+00 | -9.6154E-01 | -1.4920E-01 | 7.4080E+00 | -4.3686E+00 | -8.0145E+00 |
| A6 | -2.2894E+00 | 8.7376E+00 | -4.8976E-01 | -4.8507E+01 | -9.0029E+00 | 1.2823E+01 |
| A8 | -1.5643E+01 | -7.7692E+01 | -9.3101E+00 | 1.4949E+02 | 7.8545E+01 | 9.5629E+01 |
| A10 | 2.8637E+02 | 5.5577E+02 | 2.8720E+01 | -2.6954E+02 | -2.1628E+02 | -9.5378E+02 |
| A12 | -2.3301E+03 | -2.7352E+03 | -2.7201E+01 | 9.8384E+01 | 4.8408E+02 | 5.2042E+03 |
| A14 | 1.1826E+04 | 8.9004E+03 | -3.7464E+01 | 1.2501E+03 | -1.2204E+03 | -1.9948E+04 |
| A16 | -4.0819E+04 | -1.8747E+04 | 1.8913E+02 | -4.8841E+03 | 2.8690E+03 | 5.4728E+04 |
| A18 | 9.9359E+04 | 2.3742E+04 | -4.6485E+02 | 1.0239E+04 | -5.1399E+03 | -1.0768E+05 |
| A20 | -1.7264E+05 | -1.2363E+04 | 8.6000E+02 | -1.3788E+04 | 6.6285E+03 | 1.5182E+05 |
| A22 | 2.1281E+05 | -1.1442E+04 | -1.1552E+03 | 1.2182E+04 | -6.0556E+03 | -1.5199E+05 |
| A24 | -1.8145E+05 | 2.6495E+04 | 1.0590E+03 | -6.8105E+03 | 3.8301E+03 | 1.0542E+05 |
| A26 | 1.0154E+05 | -2.1635E+04 | -6.2405E+02 | 2.1619E+03 | -1.5967E+03 | -4.8136E+04 |
| A28 | -3.3478E+04 | 8.7633E+03 | 2.1315E+02 | -2.7917E+02 | 3.9478E+02 | 1.3009E+04 |
| A30 | 4.9212E+03 | -1.4640E+03 | -3.2102E+01 | -8.7065E+00 | -4.3859E+01 | -1.5752E+03 |

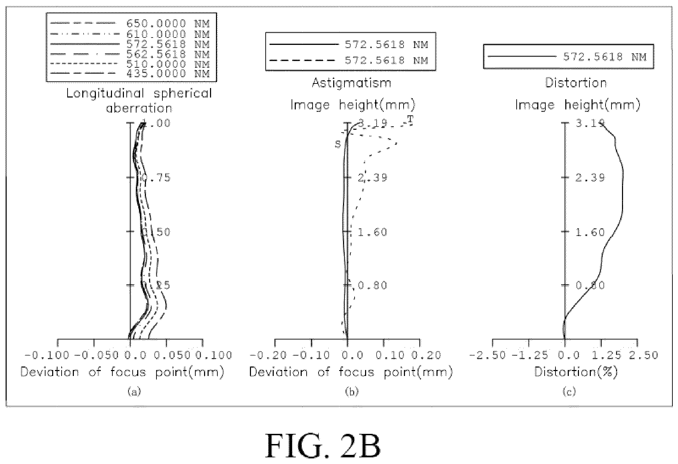

(a), (b), and (c) of FIG. 2B illustrate longitudinal spherical aberration curves, astigmatism curves, and distortion curves of the optical system 10 of the second embodiment at different focal lengths, respectively. The longitudinal spherical aberration curve represents deviations of converged focus points of light of different wavelengths after passing through each lens of the optical system10. The astigmatism curve represents the meridian field curvature and the sagittal field curvature. The distortion curve represents the value of the distortion corresponding to different angles of field of view. From the aberration diagram of FIG. 2B, the longitudinal spherical aberration, astigmatism, and distortion of the optical system 10 are well controlled, such that the optical system 10 of this embodiment has good imaging quality.

### Third embodiment

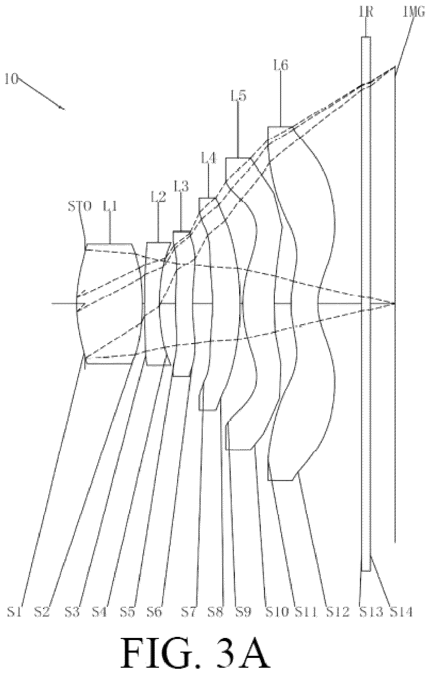

Referring to FIG. 3A, the optical system 10 of the embodiment sequentially includes the first lens L1, the second lens L2, the third lens L3, the fourth lens L4, the fifth lens L5, and the sixth lens L6 from an object side to an image side along the optical axis.

The first lens L1 has positive refractive power, an object side surface S1 of the first lens L1 is convex near an optical axis, and an image side surface S2 of the first lens L1 is convex near the optical axis.

The second lens L2 has negative refractive power, an object side surface S3 of the second lens L2 is convex near the optical axis, and an image side surface S4 of the second lens L2 is concave near the optical axis.

The third lens L3 has negative refractive power, an object side surface S5 of the third lens L3 is convex near the optical axis, and an image side surface S6 of the third lens L3 is concave near the optical axis.

The fourth lens L4 has negative refractive power, and an object side surface S7 of the fourth lens L4 is concave near the optical axis, and an image side surface S8 of the fourth lens L4 is convex near the optical axis.

The fifth lens L5 has positive refractive power, an object side surface S9 of the fifth lens L5 is convex near the optical axis, and an image side surface S10 of the fifth lens L5 is concave near the optical axis.

The sixth lens L6 has negative refractive power, an object side surface S11 of the sixth lens L6 is convex near the optical axis, and an image side surface S12 of the sixth lens L5 is concave near the optical axis.

The other structures of the optical system of the third embodiment are identical with the optical system of the second embodiment, reference can be made to the optical system of first embodiment.

Table 3a shows parameters of the optical system 10 of the embodiment. The focal length, material refractive index and Abbe number are obtained using visible light with a reference wavelength of 555 nm, the units of the Y radius, thickness, and focal length are millimeters (mm), and other parameters represent the same meaning as that in the first embodiment.

**Table 3a**

| third embodiment | | | | | | | | |
|---|---|---|---|---|---|---|---|---|
| f=3.12mm, FNO=2.13, FOV=89.5deg, TTL=4.14mm | | | | | | | | |
| Surface numeral | Surface name | Surface type | Y radius (mm) | Thickness (mm) | Material | refractive index | Abbe number | Focal length |
| | object side | sphere | infinity | infinity | | | | |
| STO | aperture stop | sphere | infinity | -0.109 | | | | |
| S1 | L1 | asphere | 1.999 | 0.855 | plastic | 1.546 | 56.114 | 2.346 |
| S2 | | asphere | -3.025 | 0.030 | | | | |
| S3 | L2 | asphere | 128.975 | 0.195 | plastic | 1.678 | 19.244 | -4.083 |
| S4 | | asphere | 2.707 | 0.208 | | | | |
| S5 | L3 | asphere | 3.294 | 0.223 | plastic | 1.591 | 28.325 | -98.926 |
| S6 | | asphere | 3.040 | 0.264 | | | | |
| S7 | L4 | asphere | -2.585 | 0.353 | plastic | 1.607 | 28.341 | -11.371 |
| S8 | | asphere | -4.346 | 0.030 | | | | |
| S9 | L5 | asphere | 1.577 | 0.410 | plastic | 1.546 | 56.114 | 3.101 |
| S10 | | asphere | 20.824 | 0.219 | | | | |
| S11 | L6 | asphere | 1.358 | 0.348 | plastic | 1.537 | 55.751 | -4.069 |
| S12 | | asphere | 0.762 | 0.575 | | | | |
| S13 | IR | sphere | infinity | 0.110 | glass | | | |
| S14 | | sphere | infinity | 0.320 | | | | |
| IMG | imaging surface | sphere | infinity | 0.000 | | | | |

Wherein, f is the focal length of the optical system 10, FNO is the aperture number of the optical system 10, FOV is the maximum field of view of the optical system 10. TTL is the distance from the object side surface of the first lens to the imaging surface along the optical axis, that is the total optical length.

Table 3b shows the coefficients of high-order terms that can be used for each aspherical mirror surface in the third embodiment, wherein each aspherical surface shape can be defined by the formula provided in the first embodiment.

**table 3b**

| Surface numeral | S1 | S2 | S3 | S4 | S5 | S6 |
|---|---|---|---|---|---|---|
| k | -5.8399E+00 | -4.5362E+00 | -9.9000E+01 | -1.8412E+00 | -2.3450E+01 | -1.2218E+01 |
| A4 | -3.6821E-02 | 5.2649E-02 | 1.0152E-01 | -3.4692E-03 | -1.7751E-01 | 2.5185E-02 |
| A6 | 1.6030E+00 | -2.8628E-01 | 8.4730E-01 | 3.5302E-01 | -2.3230E+00 | -3.6386E+00 |
| A8 | -2.5427E+01 | -2.3197E+00 | -1.6888E+01 | 1.1782E+00 | 3.4505E+01 | 4.1306E+01 |
| A10 | 2.4237E+02 | 3.5152E+01 | 1.5345E+02 | -4.1182E+01 | -3.5143E+02 | -3.5647E+02 |
| A12 | -1.5174E+03 | -2.9969E+02 | -9.1668E+02 | 4.0272E+02 | 2.4711E+03 | 2.1371E+03 |
| A14 | 6.5396E+03 | 1.7767E+03 | 3.8100E+03 | -2.3535E+03 | -1.2137E+04 | -8.9629E+03 |
| A16 | -1.9965E+04 | -7.3903E+03 | -1.1266E+04 | 9.1678E+03 | 4.2464E+04 | 2.6760E+04 |
| A18 | 4.3842E+04 | 2.1631E+04 | 2.3950E+04 | -2.4766E+04 | -1.0707E+05 | -5.7445E+04 |
| A20 | -6.9509E+04 | -4.4551E+04 | -3.6590E+04 | 4.7094E+04 | 1.9481E+05 | 8.8618E+04 |
| A22 | 7.8868E+04 | 6.4016E+04 | 3.9668E+04 | -6.2869E+04 | -2.5303E+05 | -9.6989E+04 |
| A24 | -6.2463E+04 | -6.2702E+04 | -2.9651E+04 | 5.7670E+04 | 2.2846E+05 | 7.3125E+04 |
| A26 | 3.2800E+04 | 3.9846E+04 | 1.4464E+04 | -3.4600E+04 | -1.3601E+05 | -3.5885E+04 |
| A28 | -1.0263E+04 | -1.4794E+04 | -4.1218E+03 | 1.2217E+04 | 4.7922E+04 | 1.0229E+04 |
| A30 | 1.4487E+03 | 2.4339E+03 | 5.1720E+02 | -1.9235E+03 | -7.5580E+03 | -1.2698E+03 |

| Surface numeral | S7 | S8 | S9 | S10 | S11 | S12 |
|---|---|---|---|---|---|---|
| K | -8.0460E+00 | -2.2185E+00 | -1.4649E+00 | 5.1974E+01 | -4.9069E+00 | -3.3883E+00 |
| A4 | 1.0085E+00 | -7.7324E-01 | -1.3907E-01 | 7.6632E+00 | -4.3863E+00 | -7.9761E+00 |
| A6 | -2.4057E+00 | 3.0291E+00 | -4.7453E-01 | -5.2746E+01 | -9.0036E+00 | 1.4055E+01 |
| A8 | 1.8199E+01 | 3.0305E+01 | -9.7610E+00 | 1.8975E+02 | 7.8774E+01 | 6.8296E+01 |
| A10 | -1.7363E+02 | -5.2190E+02 | 3.1414E+01 | -4.7114E+02 | -2.1695E+02 | -7.0409E+02 |
| A12 | 9.5183E+02 | 3.9613E+03 | -3.3303E+01 | 6.6595E+02 | 4.8531E+02 | 3.6502E+03 |
| A14 | -3.2418E+03 | -1.9387E+04 | -3.1782E+01 | 4.5205E+02 | -1.2223E+03 | -1.3008E+04 |
| A16 | 6.9305E+03 | 6.6307E+04 | 1.8405E+02 | -5.0339E+03 | 2.8709E+03 | 3.2739E+04 |
| A18 | -8.1313E+03 | -1.6238E+05 | -4.4060E+02 | 1.3248E+04 | -5.1389E+03 | -5.8437E+04 |
| A20 | 5.5407E+02 | 2.8539E+05 | 7.9026E+02 | -2.0212E+04 | 6.6209E+03 | 7.3849E+04 |
| A22 | 1.4703E+04 | -3.5582E+05 | -1.0479E+03 | 1.9769E+04 | -6.0419E+03 | -6.5231E+04 |
| A24 | -2.4623E+04 | 3.0640E+05 | 9.6027E+02 | -1.2412E+04 | 3.8167E+03 | 3.9034E+04 |
| A26 | 1.9939E+04 | -1.7298E+05 | -5.6899E+02 | 4.7337E+03 | -1.5888E+03 | -1.4864E+04 |
| A28 | -8.3973E+03 | 5.7556E+04 | 1.9589E+02 | -9.5267E+02 | 3.9227E+02 | 3.1696E+03 |
| A30 | 1.4718E+03 | -8.5501E+03 | -2.9773E+01 | 6.8287E+01 | -4.3521E+01 | -2.7383E+02 |

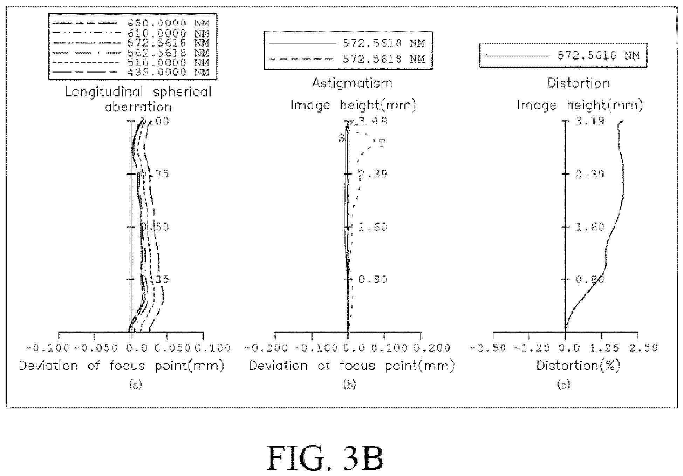

(a), (b), and (c) of FIG. 3B illustrate longitudinal spherical aberration curves, astigmatism curves, and distortion curves of the optical system 10 of the third embodiment at different focal lengths, respectively. The longitudinal spherical aberration curve represents deviations of converged focus points of light of different wavelengths after passing through each lens of the optical system10. The astigmatism curve represents the meridian field curvature and the sagittal field curvature. The distortion curve represents the value of the distortion corresponding to different angles of field of view. From the aberration diagram of FIG. 3B, the longitudinal spherical aberration, astigmatism, and distortion of the optical system 10 are well controlled, such that the optical system 10 of this embodiment has good imaging quality.

### Fourth embodiment

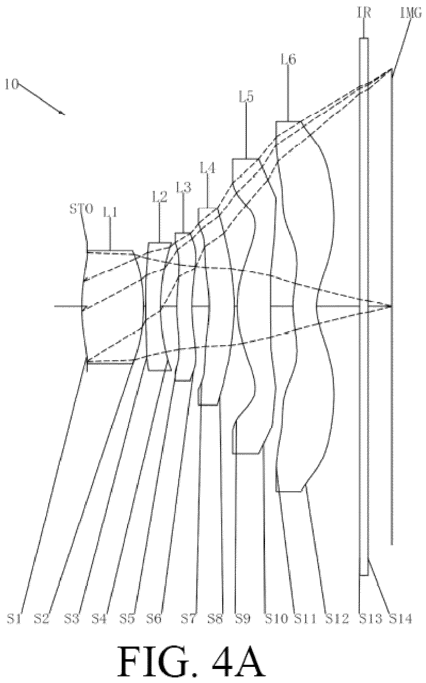

Referring to FIG. 4A, the optical system 10 of the embodiment sequentially includes the first lens L1, the second lens L2, the third lens L3, the fourth lens L4, the fifth lens L5, and the sixth lens L6 from an object side to an image side along the optical axis.

The first lens L1 has positive refractive power, an object side surface S1 of the first lens L1 is convex near an optical axis, and an image side surface S2 of the first lens L1 is convex near the optical axis.

The second lens L2 has negative refractive power, an object side surface S3 of the second lens L2 is convex near the optical axis, and an image side surface S4 of the second lens L2 is concave near the optical axis.

The third lens L3 has positive refractive power, an object side surface S5 of the third lens L3 is convex near the optical axis, and an image side surface S6 of the third lens L3 is concave near the optical axis.

The fourth lens L4 has negative refractive power, and an object side surface S7 of the fourth lens L4 is concave near the optical axis, and an image side surface S8 of the fourth lens L4 is convex near the optical axis.

The fifth lens L5 has positive refractive power, an object side surface S9 of the fifth lens L5 is convex near the optical axis, and an image side surface S10 of the fifth lens L5 is convex near the optical axis.

The sixth lens L6 has negative refractive power, an object side surface S11 of the sixth lens L6 is convex near the optical axis, and an image side surface S12 of the sixth lens L5 is concave near the optical axis.

Table 4a shows parameters of the optical system 10 of the embodiment. The focal length, material refractive index and Abbe number are obtained using visible light with a reference wavelength of 555 nm, the units of the Y radius, thickness, and focal length are millimeters (mm), and other parameters represent the same meaning as that in the first embodiment.

**Table 4a**

| fourth embodiment | | | | | | | | |
|---|---|---|---|---|---|---|---|---|
| f=2.99mm, FNO=2.06, FOV=92.3deg, TTL=4.135mm | | | | | | | | |
| Surface numeral | Surface name | Surface type | Y radius (mm) | Thickness (mm) | Material | refractive index | Abbe number | Focal length |
| | object side | sphere | infinity | infinity | | | | |
| STO | aperture stop | sphere | infinity | -0.066 | | | | |
| S1 | L1 | asphere | 2.538 | 0.822 | plastic | 1.546 | 56.114 | 2.334 |
| S2 | | asphere | -2.267 | 0.030 | | | | |
| S3 | L2 | asphere | 50.000 | 0.200 | plastic | 1.678 | 19.244 | -4.055 |
| S4 | | asphere | 2.600 | 0.217 | | | | |
| S5 | L3 | asphere | 2.355 | 0.200 | plastic | 1.644 | 23.517 | 29.117 |
| S6 | | asphere | 2.603 | 0.234 | | | | |
| S7 | L4 | asphere | -1.419 | 0.330 | plastic | 1.640 | 23.902 | -11.497 |
| S8 | | asphere | -1.918 | 0.040 | | | | |
| S9 | L5 | asphere | 1.791 | 0.442 | plastic | 1.546 | 56.114 | 3.209 |
| S10 | | asphere | -74.200 | 0.300 | | | | |
| S11 | L6 | asphere | 1.380 | 0.315 | plastic | 1.537 | 55.751 | -3.853 |
| S12 | | asphere | 0.762 | 0.574 | | | | |
| S13 | IR | sphere | infinity | 0.110 | glass | | | |
| S14 | | sphere | infinity | 0.320 | | | | |
| IMG | imaging surface | sphere | infinity | 0.000 | | | | |

Wherein, f is the focal length of the optical system 10, FNO is the aperture number of the optical system 10, FOV is the maximum field of view of the optical system 10. TTL is the distance from the object side surface of the first lens to the imaging surface along the optical axis, that is the total optical length.

Table 4b shows the coefficients of high-order terms that can be used for each aspherical mirror surface in the fourth embodiment, wherein each aspherical surface shape can be defined by the formula provided in the first embodiment.

**Table 4b**

| Surface numeral | S1 | S2 | S3 | S4 | S5 | S6 |
|---|---|---|---|---|---|---|
| k | -1.1569E+01 | -3.4334E+00 | -9.9000E+01 | -7.0356E+00 | -1.9526E+01 | -9.9000E+01 |
| A4 | -2.0265E-02 | -2.7258E-02 | -3.6390E-02 | -6.3400E-02 | -1.1985E-01 | 6.4646E-01 |
| A6 | 6.2807E-01 | 2.7781E-02 | 7.5533E-01 | 5.1695E-01 | 6.5854E-01 | -2.4865E+00 |
| A8 | -7.8319E+00 | 2.2279E+00 | -4.8678E+00 | -1.4130E+00 | -1.3089E+01 | -1.2084E+01 |
| A10 | 5.2284E+01 | -3.0071E+01 | 2.8030E+01 | 1.9643E+00 | 1.0251E+02 | 2.0014E+02 |
| A12 | -1.8794E+02 | 2.1069E+02 | -1.4745E+02 | 8.0299E+00 | -4.9499E+02 | -1.3529E+03 |
| A14 | 2.2760E+02 | -9.7302E+02 | 6.0191E+02 | -9.9751E+01 | 1.6435E+03 | 5.9280E+03 |
| A16 | 9.9525E+02 | 3.1348E+03 | -1.7799E+03 | 5.1114E+02 | -3.8964E+03 | -1.8266E+04 |
| A18 | -5.6582E+03 | -7.1730E+03 | 3.7722E+03 | -1.5836E+03 | 6.6874E+03 | 4.0550E+04 |
| A20 | 1.4047E+04 | 1.1696E+04 | -5.7245E+03 | 3.2149E+03 | -8.3266E+03 | -6.5124E+04 |
| A22 | -2.1174E+04 | -1.3471E+04 | 6.1705E+03 | -4.3850E+03 | 7.4648E+03 | 7.4925E+04 |
| A24 | 2.0479E+04 | 1.0695E+04 | -4.6150E+03 | 3.9930E+03 | -4.7242E+03 | -6.0150E+04 |
| A26 | -1.2467E+04 | -5.5648E+03 | 2.2779E+03 | -2.3322E+03 | 2.0241E+03 | 3.1969E+04 |
| A28 | 4.3634E+03 | 1.7068E+03 | -6.6761E+02 | 7.9110E+02 | -5.3423E+02 | -1.0099E+04 |
| A30 | -6.7087E+02 | -2.3383E+02 | 8.8012E+01 | -1.1858E+02 | 6.6502E+01 | 1.4343E+03 |

| Surface numeral | S7 | S8 | S9 | S10 | S11 | S12 |
|---|---|---|---|---|---|---|
| K | -1.8137E+01 | 0.0000E+00 | -8.9310E-01 | -6.7832E+01 | -3.2236E+00 | -2.0503E+00 |
| A4 | 5.1742E-01 | 2.5170E+00 | 2.1830E+00 | -2.6518E-01 | -1.8643E+01 | -2.4641E+01 |
| A6 | 3.9559E+00 | -1.3078E+01 | -2.8730E+01 | 6.0889E+01 | 1.2164E+02 | 2.2603E+02 |
| A8 | -5.2686E+01 | 5.5767E+01 | 2.4420E+02 | -6.2793E+02 | -9.7014E+02 | -1.8335E+03 |
| A10 | 3.0116E+02 | -3.8017E+02 | -1.8662E+03 | 2.3951E+03 | 5.8138E+03 | 1.1937E+04 |
| A12 | -1.0501E+03 | 2.6630E+03 | 1.0891E+04 | 2.3120E+03 | -2.0503E+04 | -5.7994E+04 |
| A14 | 2.1846E+03 | -1.2916E+04 | -4.5581E+04 | -6.3934E+04 | 4.2047E+04 | 2.0723E+05 |
| A16 | -1.5574E+03 | 4.2282E+04 | 1.3565E+05 | 3.1337E+05 | -4.5798E+04 | -5.4630E+05 |
| A18 | -5.5293E+03 | -9.5730E+04 | -2.8799E+05 | -8.7390E+05 | 8.2915E+03 | 1.0643E+06 |
| A20 | 2.1052E+04 | 1.5201E+05 | 4.3537E+05 | 1.5930E+06 | 4.8559E+04 | -1.5246E+06 |
| A22 | -3.6539E+04 | -1.6905E+05 | -4.6308E+05 | -1.9667E+06 | -7.3196E+04 | 1.5818E+06 |
| A24 | 3.8165E+04 | 1.2911E+05 | 3.3748E+05 | 1.6359E+06 | 5.2390E+04 | -1.1538E+06 |
| A26 | -2.4445E+04 | -6.4571E+04 | -1.5998E+05 | -8.7988E+05 | -2.0367E+04 | 5.6007E+05 |
| A28 | 8.8584E+03 | 1.9063E+04 | 4.4337E+04 | 2.7676E+05 | 3.8397E+03 | -1.6220E+05 |
| A30 | -1.3919E+03 | -2.5201E+03 | -5.4392E+03 | -3.8695E+04 | -2.1099E+02 | 2.1178E+04 |

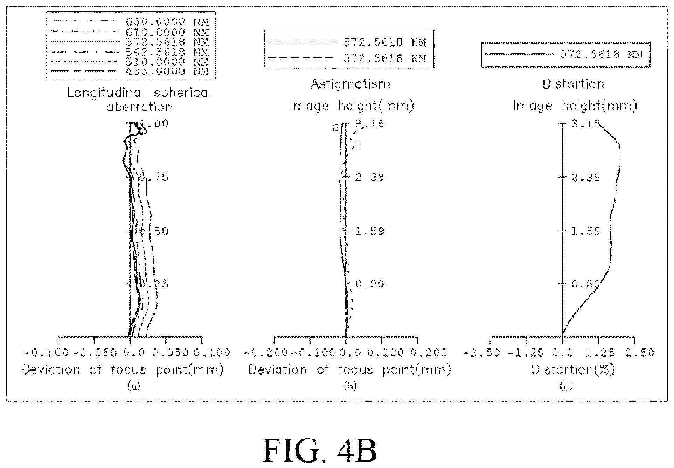

(a), (b), and (c) of FIG. 4B illustrate longitudinal spherical aberration curves, astigmatism curves, and distortion curves of the optical system 10 of the fourth embodiment at different focal lengths, respectively. The longitudinal spherical aberration curve represents deviations of converged focus points of light of different wavelengths after passing through each lens of the optical system10. The astigmatism curve represents the meridian field curvature and the sagittal field curvature. The distortion curve represents the value of the distortion corresponding to different angles of field of view. From the aberration diagram of FIG. 4B, the longitudinal spherical aberration, astigmatism, and distortion of the optical system 10 are well controlled, such that the optical system 10 of this embodiment has good imaging quality.

### Fifth embodiment

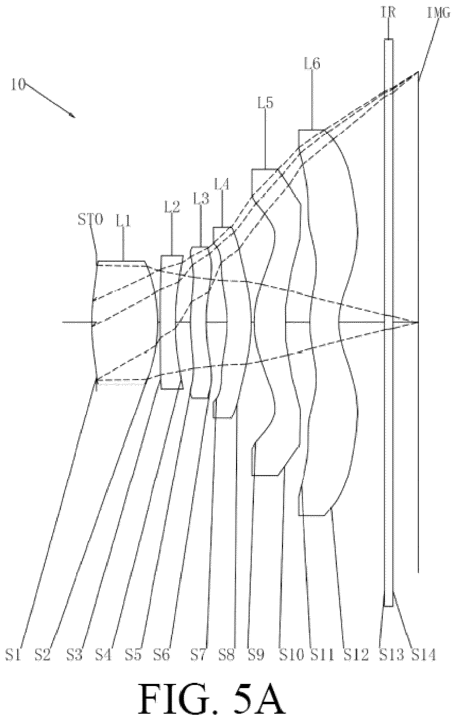

Referring to FIG. 5A, the optical system 10 of the embodiment sequentially includes the first lens L1, the second lens L2, the third lens L3, the fourth lens L4, the fifth lens L5, and the sixth lens L6 from an object side to an image side along the optical axis.

The first lens L1 has positive refractive power, an object side surface S1 of the first lens L1 is convex near an optical axis, and an image side surface S2 of the first lens L1 is convex near the optical axis.

The second lens L2 has negative refractive power, an object side surface S3 of the second lens L2 is concave near the optical axis, and an image side surface S4 of the second lens L2 is concave near the optical axis.

The third lens L3 has positive refractive power, an object side surface S5 of the third lens L3 is convex near the optical axis, and an image side surface S6 of the third lens L3 is concave near the optical axis.

The fourth lens L4 has negative refractive power, and an object side surface S7 of the fourth lens L4 is concave near the optical axis, and an image side surface S8 of the fourth lens L4 is convex near the optical axis.

The fifth lens L5 has positive refractive power, an object side surface S9 of the fifth lens L5 is convex near the optical axis, and an image side surface S10 of the fifth lens L5 is concave near the optical axis.

The sixth lens L6 has negative refractive power, an object side surface S11 of the sixth lens L6 is convex near the optical axis, and an image side surface S12 of the sixth lens L5 is concave near the optical axis.

Table 5a shows parameters of the optical system 10 of the embodiment. The focal length, material refractive index and Abbe number are obtained using visible light with a reference wavelength of 555 nm, the units of the Y radius, thickness, and focal length are millimeters (mm), and other parameters represent the same meaning as that in the first embodiment.

**Table 5a**

| fifth embodiment | | | | | | | | |
|---|---|---|---|---|---|---|---|---|
| f=2.99mm, FNO=2.06, FOV=92.2deg, TTL=4.135mm | | | | | | | | |
| Surface numeral | Surface name | Surface type | Y radius (mm) | Thickness (mm) | Material | refractive index | Abbe number | Focal length |
| | object side | sphere | infinity | A | | | | |
| STO | aperture stop | sphere | infinity | -0.058 | | | | |
| S1 | L1 | asphere | 2.735 | 0.837 | plastic | 1.546 | 56.114 | 2.331 |
| S2 | | asphere | -2.122 | 0.030 | | | | |
| S3 | L2 | asphere | -22.336 | 0.195 | plastic | 1.678 | 19.244 | -4.438 |
| S4 | | asphere | 3.487 | 0.189 | | | | |
| S5 | L3 | asphere | 2.268 | 0.199 | plastic | 1.591 | 28.325 | 41.362 |
| S6 | | asphere | 2.419 | 0.269 | | | | |
| S7 | L4 | asphere | -1.297 | 0.300 | plastic | 1.619 | 25.947 | -7.274 |
| S8 | | asphere | -1.984 | 0.040 | | | | |
| S9 | L5 | asphere | 1.528 | 0.391 | plastic | 1.546 | 56.114 | 3.014 |
| S10 | | asphere | 19.568 | 0.313 | | | | |
| S11 | L6 | asphere | 1.608 | 0.365 | plastic | 1.537 | 55.751 | -4.270 |
| S12 | | asphere | 0.870 | 0.576 | | | | |
| S13 | IR | sphere | infinity | 0.110 | glass | | | |
| S14 | | sphere | infinity | 0.320 | | | | |
| IMG | imaging surface | sphere | infinity | 0.000 | | | | |

Wherein, f is the focal length of the optical system 10, FNO is the aperture number of the optical system 10, and FOV is the maximum field of view of the optical system 10. TTL is the distance from the object side surface of the first lens to the imaging surface along the optical axis, that is the total optical length.

Table 5b shows the coefficients of high-order terms that can be used for each aspherical mirror surface in the fifth embodiment, wherein each aspherical surface shape can be defined by the formula provided in the first embodiment.

**Table 5b**

| Surface numeral | S1 | S2 | S3 | S4 | S5 | S6 |
|---|---|---|---|---|---|---|
| k | -1.4384E+01 | -3.2861E+00 | -1.4486E+01 | -8.7970E+00 | -1.1759E+01 | 0.0000E+00 |
| A4 | -1.3557E-02 | 3.1863E-05 | 8.7878E-02 | 6.6603E-02 | -3.7250E-02 | 7.4728E-02 |
| A6 | 4.0548E-01 | 6.3028E-01 | 2.8517E-01 | -4.6864E-01 | 7.8841E-03 | 2.7614E-01 |
| A8 | -5.7241E+00 | -1.3135E+01 | -9.9389E+00 | 3.2264E+00 | -5.6806E+00 | -1.2501E+01 |
| A10 | 4.6959E+01 | 1.2010E+02 | 1.0172E+02 | -1.8063E+01 | 3.4824E+01 | 9.2647E+01 |
| A12 | -2.5220E+02 | -6.7910E+02 | -6.1464E+02 | 9.1675E+01 | -9.2470E+01 | -4.5457E+02 |
| A14 | 9.3368E+02 | 2.5948E+03 | 2.4765E+03 | -3.8408E+02 | 1.7338E+01 | 1.6963E+03 |
| A16 | -2.4615E+03 | -6.9756E+03 | -6.9950E+03 | 1.2017E+03 | 7.3155E+02 | -4.8809E+03 |
| A18 | 4.7054E+03 | 1.3451E+04 | 1.4163E+04 | -2.7074E+03 | -2.7490E+03 | 1.0649E+04 |
| A20 | -6.5572E+03 | -1.8696E+04 | -2.0680E+04 | 4.3420E+03 | 5.5135E+03 | -1.7238E+04 |
| A22 | 6.6091E+03 | 1.8576E+04 | 2.1598E+04 | -4.8985E+03 | -7.0177E+03 | 2.0199E+04 |
| A24 | -4.6996E+03 | -1.2870E+04 | -1.5736E+04 | 3.7932E+03 | 5.8315E+03 | -1.6563E+04 |
| A26 | 2.2384E+03 | 5.9053E+03 | 7.5944E+03 | -1.9177E+03 | -3.0724E+03 | 8.9837E+03 |
| A28 | -6.4122E+02 | -1.6128E+03 | -2.1813E+03 | 5.6969E+02 | 9.3256E+02 | -2.8897E+03 |
| A30 | 8.3543E+01 | 1.9847E+02 | 2.8220E+02 | -7.5380E+01 | -1.2422E+02 | 4.1676E+02 |

| Surface numeral | S7 | S8 | S9 | S10 | S11 | S12 |
|---|---|---|---|---|---|---|
| K | -1.0238E+01 | -2.8970E+01 | -1.1692E+00 | 9.5929E+01 | -2.2948E+00 | -2.1932E+00 |
| A4 | 8.4039E-02 | -2.2539E-01 | 3.5787E+00 | 1.2957E+01 | -1.0562E+00 | -1.1306E+01 |
| A6 | 3.4070E+00 | -5.3848E-01 | -5.4888E+01 | -1.3556E+02 | -1.7938E+02 | -3.9696E+01 |
| A8 | -2.6118E+01 | -3.0394E+00 | 4.5570E+02 | 1.0235E+03 | 2.4549E+03 | 1.4076E+03 |
| A10 | 1.2106E+02 | 6.5764E+01 | -2.7058E+03 | -6.3241E+03 | -1.9309E+04 | -1.4046E+04 |
| A12 | -3.7860E+02 | -3.7948E+02 | 1.1585E+04 | 3.0827E+04 | 1.0038E+05 | 8.3599E+04 |
| A14 | 7.6515E+02 | 1.3412E+03 | -3.5817E+04 | -1.1462E+05 | -3.5682E+05 | -3.3424E+05 |
| A16 | -7.7617E+02 | -3.3928E+03 | 7.9615E+04 | 3.1941E+05 | 8.8860E+05 | 9.4030E+05 |
| A18 | -5.2579E+02 | 6.3907E+03 | -1.2562E+05 | -6.5996E+05 | -1.5768E+06 | -1.9008E+06 |
| A20 | 3.3461E+03 | -8.9087E+03 | 1.3674E+05 | 9.9959E+05 | 2.0064E+06 | 2.7763E+06 |
| A22 | -5.9759E+03 | 8.8934E+03 | -9.6515E+04 | -1.0909E+06 | -1.8187E+06 | -2.9062E+06 |
| A24 | 6.1323E+03 | -6.0086E+03 | 3.7514E+04 | 8.3280E+05 | 1.1469E+06 | 2.1265E+06 |
| A26 | -3.8459E+03 | 2.5021E+03 | -2.6430E+03 | -4.2139E+05 | -4.7826E+05 | -1.0330E+06 |
| A28 | 1.3776E+03 | -5.3345E+02 | -3.5523E+03 | 1.2684E+05 | 1.1852E+05 | 2.9928E+05 |
| A30 | -2.1726E+02 | 3.3523E+01 | 9.9522E+02 | -1.7182E+04 | -1.3211E+04 | -3.9142E+04 |

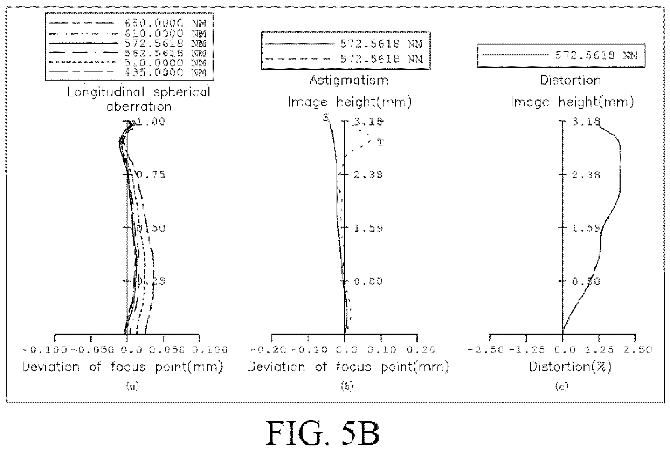

(a), (b), and (c) of FIG. 2B illustrate longitudinal spherical aberration curves, astigmatism curves, and distortion curves of the optical system 10 of the fifth embodiment at different focal lengths, respectively. The longitudinal spherical aberration curve represents deviations of converged focus points of light of different wavelengths after passing through each lens of the optical system10. The astigmatism curve represents the meridian field curvature and the sagittal field curvature. The distortion curve represents the value of the distortion corresponding to different angles of field of view. From the aberration diagram of FIG. 5B, the longitudinal spherical aberration, astigmatism, and distortion of the optical system 10 are well controlled, such that the optical system 10 of this embodiment has good imaging quality.

### Sixth embodiment

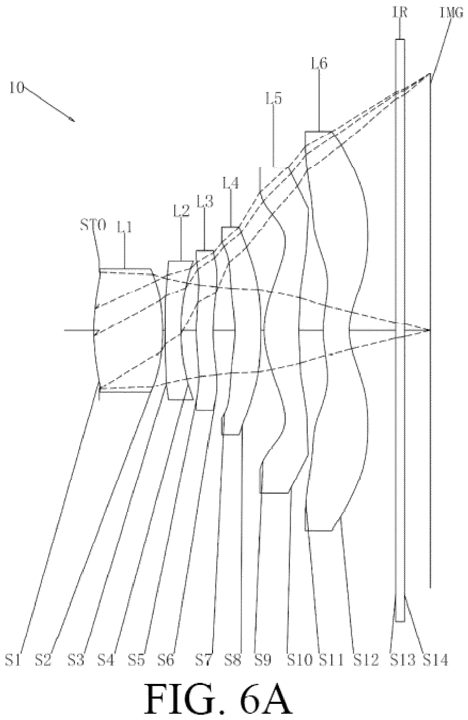

Referring to FIG. 6A, the optical system 10 of the embodiment sequentially includes the first lens L1, the second lens L2, the third lens L3, the fourth lens L4, the fifth lens L5, and the sixth lens L6 from an object side to an image side along the optical axis.

The first lens L1 has positive refractive power, an object side surface S1 of the first lens L1 is convex near an optical axis, and an image side surface S2 of the first lens L1 is convex near the optical axis.

The second lens L2 has negative refractive power, an object side surface S3 of the second lens L2 is convex near the optical axis, and an image side surface S4 of the second lens L2 is concave near the optical axis.

The third lens L3 has positive refractive power, an object side surface S5 of the third lens L3 is convex near the optical axis, and an image side surface S6 of the third lens L3 is concave near the optical axis.

The fourth lens L4 has negative refractive power, and an object side surface S7 of the fourth lens L4 is concave near the optical axis, and an image side surface S8 of the fourth lens L4 is convex near the optical axis.

The fifth lens L5 has positive refractive power, an object side surface S9 of the fifth lens L5 is convex near the optical axis, and an image side surface S10 of the fifth lens L5 is concave near the optical axis.

The sixth lens L6 has negative refractive power, an object side surface S11 of the sixth lens L6 is convex near the optical axis, and an image side surface S12 of the sixth lens L5 is concave near the optical axis.

Table 6a shows parameters of the optical system 10 of the embodiment. The focal length, material refractive index and Abbe number are obtained using visible light with a reference wavelength of 555 nm, the units of the Y radius, thickness, and focal length are millimeters (mm), and other parameters represent the same meaning as that in the first embodiment.

**Table 6a**

| sixth embodiment | | | | | | | | |
|---|---|---|---|---|---|---|---|---|
| f=2.99mm, FNO=2.08, FOV=92.3deg, TTL=4.135mm | | | | | | | | |
| Surface numeral | Surface name | Surface type | Y radius (mm) | Thickness (mm) | Material | refractive index | Abbe number | Focal length |
| | object side | sphere | infinity | A | | | | |
| STO | aperture stop | sphere | infinity | -0.069 | | | | |
| S1 | L1 | asphere | 2.486 | 0.845 | plastic | 1.546 | 56.114 | 2.337 |
| S2 | | asphere | -2.306 | 0.030 | | | | |
| S3 | L2 | asphere | 159.912 | 0.200 | plastic | 1.678 | 19.244 | -4.118 |
| S4 | | asphere | 2.741 | 0.188 | | | | |
| S5 | L3 | asphere | 2.741 | 0.200 | plastic | 1.640 | 23.902 | 59.792 |
| S6 | | asphere | 2.869 | 0.268 | | | | |
| S7 | L4 | asphere | -1.580 | 0.320 | plastic | 1.591 | 28.325 | -3.977 |
| S8 | | asphere | -5.178 | 0.040 | | | | |
| S9 | L5 | asphere | 1.115 | 0.429 | plastic | 1.546 | 56.114 | 2.098 |
| S10 | | asphere | 36.091 | 0.300 | | | | |
| S11 | L6 | asphere | 1.371 | 0.315 | plastic | 1.537 | 55.751 | -3.783 |
| S12 | | asphere | 0.753 | 0.571 | | | | |
| S13 | IR | sphere | infinity | 0.110 | glass | | | |
| S14 | | sphere | infinity | 0.318 | | | | |
| IMG | imaging surface | sphere | infinity | 0.000 | | | | |

Wherein, f is the focal length of the optical system 10, FNO is the aperture number of the optical system 10, and FOV is the maximum field of view of the optical system 10. TTL is the distance from the object side surface of the first lens to the imaging surface along the optical axis, that is the total optical length.

Table 6b shows the coefficients of high-order terms that can be used for each aspherical mirror surface in the sixth embodiment, wherein each aspherical surface shape can be defined by the formula provided in the first embodiment.

**Table 6b**

| Surface numeral | S1 | S2 | S3 | S4 | S5 | S6 |
|---|---|---|---|---|---|---|
| k | -1.0583E+01 | -3.9756E+00 | 9.7275E+01 | -3.7150E+00 | -6.8505E+01 | 0.0000E+00 |
| A4 | -3.6953E-02 | 1.2453E-01 | 1.7393E-01 | 4.0184E-02 | 2.4575E-01 | 3.2839E-01 |
| A6 | 1.1619E+00 | -1.4019E+00 | -8.3725E-01 | 4.6395E-02 | -2.9236E+00 | -4.9527E+00 |
| A8 | -1.6182E+01 | 1.1111E+01 | 1.1111E+00 | -2.8521E+00 | 1.8972E+01 | 3.6756E+01 |
| A10 | 1.3040E+02 | -7.4583E+01 | 2.5848E+01 | 3.3356E+01 | -1.0244E+02 | -2.1949E+02 |
| A12 | -6.6864E+02 | 3.9197E+02 | -2.6152E+02 | -2.0787E+02 | 4.2539E+02 | 9.8620E+02 |
| A14 | 2.2840E+03 | -1.5563E+03 | 1.3394E+03 | 8.2345E+02 | -1.3047E+03 | -3.2622E+03 |
| A16 | -5.3077E+03 | 4.5823E+03 | -4.4188E+03 | -2.2293E+03 | 2.9350E+03 | 7.9447E+03 |
| A18 | 8.3774E+03 | -9.9003E+03 | 1.0046E+04 | 4.2604E+03 | -4.8416E+03 | -1.4272E+04 |
| A20 | -8.6860E+03 | 1.5543E+04 | -1.6101E+04 | -5.8091E+03 | 5.8318E+03 | 1.8833E+04 |
| A22 | 5.3024E+03 | -1.7456E+04 | 1.8189E+04 | 5.6192E+03 | -5.0615E+03 | -1.8000E+04 |
| A24 | -1.0909E+03 | 1.3633E+04 | -1.4187E+04 | -3.7654E+03 | 3.0794E+03 | 1.2103E+04 |
| A26 | -8.1497E+02 | -7.0214E+03 | 7.2746E+03 | 1.6608E+03 | -1.2466E+03 | -5.4204E+03 |
| A28 | 6.1845E+02 | 2.1415E+03 | -2.2074E+03 | -4.3320E+02 | 3.0230E+02 | 1.4496E+03 |
| A30 | -1.2944E+02 | -2.9277E+02 | 3.0038E+02 | 5.0556E+01 | -3.3437E+01 | -1.7498E+02 |

| Surface numeral | S7 | S8 | S9 | S10 | S11 | S12 |
|---|---|---|---|---|---|---|
| K | -1.7717E+01 | 0.0000E+00 | -1.0000E+00 | 9.9000E+01 | -1.0000E+00 | -2.2821E+00 |
| A4 | 9.8001E-01 | 7.0659E-01 | -2.6168E+00 | 2.4900E+00 | -2.2336E+01 | -2.4177E+01 |
| A6 | -7.3953E+00 | -1.6800E+01 | 1.4968E+01 | 8.2174E+01 | 1.4517E+02 | 2.1690E+02 |
| A8 | 5.6385E+01 | 1.6268E+02 | -1.1535E+02 | -1.6268E+03 | -1.3022E+03 | -1.7032E+03 |
| A10 | -3.5213E+02 | -1.1582E+03 | 3.1517E+02 | 1.3961E+04 | 9.4314E+03 | 1.0975E+04 |
| A12 | 1.6570E+03 | 6.1034E+03 | 1.3926E+03 | -7.3063E+04 | -4.2940E+04 | -5.3415E+04 |
| A14 | -5.7628E+03 | -2.3250E+04 | -1.5086E+04 | 2.5937E+05 | 1.2635E+05 | 1.9130E+05 |
| A16 | 1.4771E+04 | 6.3875E+04 | 6.1760E+04 | -6.5590E+05 | -2.4967E+05 | -5.0298E+05 |
| A18 | -2.7894E+04 | -1.2705E+05 | -1.5208E+05 | 1.2088E+06 | 3.3471E+05 | 9.7015E+05 |
| A20 | 3.8615E+04 | 1.8290E+05 | 2.4794E+05 | -1.6334E+06 | -2.9584E+05 | -1.3642E+06 |
| A22 | -3.8630E+04 | -1.8874E+05 | -2.7433E+05 | 1.6038E+06 | 1.5394E+05 | 1.3773E+06 |
| A24 | 2.7119E+04 | 1.3628E+05 | 2.0405E+05 | -1.1145E+06 | -2.5055E+04 | -9.6952E+05 |
| A26 | -1.2639E+04 | -6.5491E+04 | -9.7733E+04 | 5.1959E+05 | -2.0492E+04 | 4.5060E+05 |
| A28 | 3.4998E+03 | 1.8853E+04 | 2.7225E+04 | -1.4572E+05 | 1.3186E+04 | -1.2401E+05 |
| A30 | -4.3408E+02 | -2.4642E+03 | -3.3497E+03 | 1.8571E+04 | -2.4470E+03 | 1.5277E+04 |

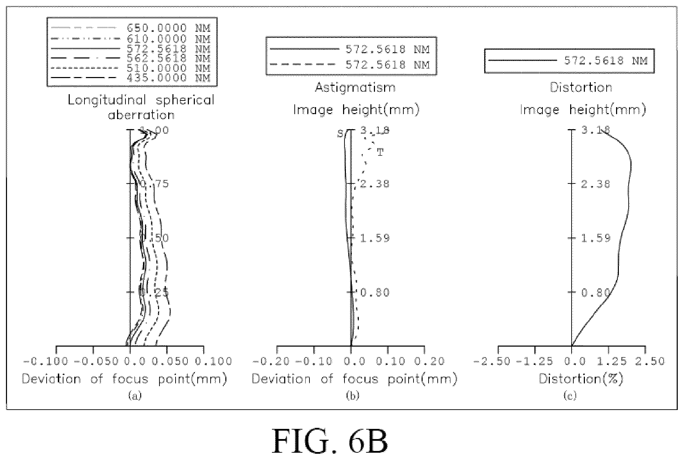

(a), (b), and (c) of FIG. 6B illustrate longitudinal spherical aberration curves, astigmatism curves, and distortion curves of the optical system 10 of the sixth embodiment at different focal lengths, respectively. The longitudinal spherical aberration curve represents deviations of converged focus points of light of different wavelengths after passing through each lens of the optical system10. The astigmatism curve represents the meridian field curvature and the sagittal field curvature. The distortion curve represents the value of the distortion corresponding to different angles of field of view. From the aberration diagram of FIG. 6B, the longitudinal spherical aberration, astigmatism, and distortion of the optical system 10 are well controlled, such that the optical system 10 of this embodiment has good imaging quality.

Table 7 shows values of FNO , FOV , TTL/ImgH , R11/f , R12/f , |R21|/f , R22/f , R31/f , R32/f , R41/f , R42/f , R51/f , |R52|/f , R61/f , R62/f , f1/f , f2/f , |f3|/f , f4/f , f5/f , f6/f , FNO*tan(HFOV), f/SD11, CT1/SD11, ET1/CT1, CT5/ET5, ET6/CT6, CT5/CT6, TD/CT1, AT56/AT23, AT34/AT23, (SAG11+SAG21)/TTL, |R32/R41|, |(R61+R62)/f6|, L42/(W4+V4), L62/(W6+V6), T56max/T56min of the optical systems of the first embodiment to the sixth embodiment.

**Table 7**

| | First embodiment | Second embodiment | Third embodiment | Fourth embodiment | Fifth embodiment | Sixth embodiment |
|---|---|---|---|---|---|---|
| CT5/CT6 | 1.646 | 1.186 | 1.178 | 1.403 | 1.071 | 1.362 |
| TD/CT1 | 3.617 | 3.675 | 3.665 | 3.807 | 3.738 | 3.71 |
| CT1/SD1 | 1.205 | 1.166 | 1.164 | 1.132 | 1.152 | 1.169 |
| AT56/AT23 | 0.74 | 1.034 | 1.057 | 1.382 | 1.659 | 1.597 |
| AT34/AT23 | 1.164 | 1.177 | 1.27 | 1.079 | 1.423 | 1.427 |
| ET6/CT6 | 1.184 | 0.997 | 0.92 | 1.048 | 0.904 | 1.046 |
| f1/f | 0.706 | 0.749 | 0.752 | 0.78 | 0.779 | 0.781 |
| f2/f | -1.147 | -1.274 | -1.31 | -1.355 | -1.483 | -1.376 |
| \|f3\|/f | -38.1 | -27.62 | -31.74 | 9.732 | 13.824 | 19.984 |
| f4/f | -4.166 | -6.77 | -3.648 | -3.842 | -2.431 | -1.329 |
| f5/f | 0.977 | 1.049 | 0.995 | 1.073 | 1.007 | 0.701 |
| f6/f | -1.203 | -1.214 | -1.305 | -1.288 | -1.427 | -1.264 |
| R11/f | 0.718 | 0.675 | 0.641 | 0.848 | 0.914 | 0.831 |
| R12/f | -0.714 | -0.886 | -0.97 | -0.758 | -0.709 | -0.771 |
| \|R21\|/f | -21.56 | 644.09 | 41.374 | 16.711 | -7.465 | 53.446 |
| R22/f | 0.802 | 0.862 | 0.868 | 0.869 | 1.165 | 0.916 |
| R31/f | 0.964 | 0.962 | 1.057 | 0.787 | 0.758 | 0.916 |
| R32/f | 0.898 | 0.882 | 0.975 | 0.87 | 0.808 | 0.959 |
| R41/f | -0.609 | -0.854 | -0.829 | -0.474 | -0.434 | -0.528 |
| R42/f | -0.865 | -1.138 | -1.394 | -0.641 | -0.663 | -1.731 |
| R51/f | 0.543 | 0.504 | 0.506 | 0.598 | 0.511 | 0.373 |
| \|R52\|/f | -24.34 | 3.863 | 6.68 | -24.8 | 6.54 | 12.063 |
| R61/f | 0.358 | 0.431 | 0.435 | 0.461 | 0.537 | 0.458 |
| R62/f | 0.208 | 0.238 | 0.245 | 0.255 | 0.291 | 0.252 |
| FNO | 2.134 | 2.133 | 2.133 | 2.064 | 2.064 | 2.076 |
| FOV(deg) | 92.078 | 90.461 | 89.529 | 92.275 | 92.224 | 92.281 |
| TTL/ImgH | 1.284 | 1.296 | 1.296 | 1.300 | 1.300 | 1.300 |
| f/SD11 | 4.246 | 4.244 | 4.244 | 4.117 | 4.119 | 4.14 |
| ET1/CT1 | 0.709 | 0.706 | 0.701 | 0.73 | 0.717 | 0.734 |
| FNO*tan(HFOV) | 2.213 | 2.151 | 2.116 | 2.148 | 2.146 | 2.161 |
| (SAG11+SAG2 1)/TTL | 0.248 | 0.255 | 0.256 | 0.247 | 0.231 | 0.254 |
| \|R32/R41\| | 1.475 | 1.033 | 1.176 | 1.834 | 1.864 | 1.816 |
| L42/(W4+V4) | 4.561 | 4.317 | 4.463 | 4.269 | 4.32 | 4.241 |
| CT5/ET5 | 1.542 | 1.19 | 1.289 | 1.263 | 1.184 | 1.244 |
| L62/(W6+V6) | 4.769 | 4.68 | 4.463 | 4.985 | 5.001 | 5.039 |
| \|(R61+R62)/f6\| | 0.471 | 0.551 | 0.521 | 0.556 | 0.58 | 0.561 |
| T56max/T56min | 10.492 | 10.351 | 10.103 | 4.36 | 4.438 | 8.332 |

It can be seen from table 7, the optical systems of firs to sixth embodiments satisfy the following relational expressions: 1.9<FNO<2.3, 85deg<FOV<100deg , 1.1<TTL/ImgH<1.4, 0.5<R11/f<1.1, -1.1<R12/f<-0.5, 5<|R21|/f , 0.6<R22/f<1.3, 0.5<R31/f<1.2, 0.6<R32/f<1.2, -1<R41/f<-0.3, -2.1<R42/f<-0.4, 0.2<R51/f<0.8, 2.5<|R52|/f , 0.2<R611f<0.7, 0.1<R62/f<0.35, 0.6<f1/f<0.9, -1.6<f2/f<-1, 7<|f3|/f , -7<f4/f<-1, 0.5<f5/f<1.2, -1.6<f6/f<-1, 2<FNO*tan(HFOV)<2.4, 3.8<f/SD11<4.5, 1.1<CT1/SD11<1.4, 0.6<ET1/CT1<0.9, 1<CT5/ET5<1.8, 0.8<ET6/CT6<1.3, 1<CT5/CT6<1.8, 3<TD/CT1<4, 0.5<AT56/AT23<1.8, 1<AT34/AT23<1.6, 0.2<(SAG11+SAG21)/TTL<0.3, 1<|R32/R41|<2, 0.3<|(R61+R62)/f6|<0.8, 4<L42/(W4+V4)<5, 4<L62/(W6+V6)<6, 4<T56max/T56min<11.

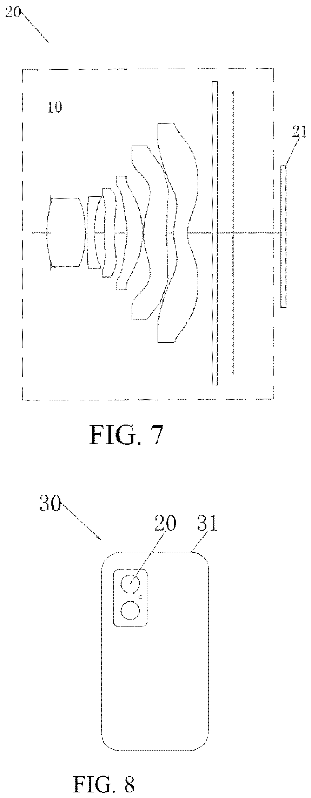

Referring to FIG. 7, an embodiment of the present application further provides a camera module 20. The camera module 20 includes a photosensitive chip 21 and the optical system 10 of any one of the above embodiments. A photosensitive surface of the photosensitive chip 21 is located on the imaging surface of the optical system 10. The light of an object that passes through the lens and is incident on the photosensitive surface can be converted into an electrical signal of an image. The photosensitive chip can be a CMOS sensor (Complementary Metal Oxide Semiconductor) or a CCD sensor (Charge Coupled Device). The camera module 20 can be an imaging module integrated into an electronic device 30 or an independent lens. By adding the optical system 10 provided by the present application to the camera module 20, a surface shape and refractive power of each lens in the optical system 10 can be reasonably designed, so that the camera module 20 can meet the requirements of large aperture, miniaturization, and good imaging effect.

Referring to FIG. 8, an embodiment of the present application further provides the electronic device 30. The electronic device 30 includes a housing 31 and the lens module 20 of the above embodiment. The lens module 20 is disposed in the housing 31. The electronic device 30 may be, but is not limited to, an automobile, a monitor, a smart phone, a computer, a smart watch, or the like. By adding the camera module 20 provided by the present application to the electronic device 30, the electronic device 30 can meet the requirements of large aperture, miniaturization, and good imaging effect.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

## Claims

1. An optical system (10), wherein the optical system (10) consists of six lenses having refractive power, from an object side to an image side along an optical axis, the six lenses sequentially comprising:
a first lens (L1) having positive refractive power, and an object side surface (S1) and an image side surface (S2) of the first lens (L1) being convex near the optical axis;
a second lens (L2) having refractive power, and an image side surface (S4) of the second lens (L2) being concave near the optical axis;
a third lens (L3) having refractive power;
a fourth lens (L4) having negative refractive power, an object side surface (S7) of the fourth lens (L4) being concave near the optical axis, and an image side surface (S8) of the fourth lens (S7) being convex near the optical axis;
a fifth lens (L5) having positive refractive power, and an object side surface (S9) of the fifth lens (L5) being convex near the optical lens; and
a sixth lens (L6) having negative refractive power, an object side surface (S11) of the sixth lens (L6) being convex near the optical axis, and an image side surface (S12) of the sixth lens (L6) being concave near the optical axis;
wherein the optical system (10) satisfies following relational expression: $1.9 < FNO < 2.3 ;$
wherein, FNO is an aperture number of the optical system (10),
**characterised by** an object side surface (S5) of the third lens (L3) being convex near the optical axis,
and an image side surface (S6) of the third lens (L3) being concave near the optical axis.

2. The optical system (10) of claim 1, **characterized in that**, the optical system (10) further satisfies at least one of following relational expressions: $0.5 < R 11 / f < 1.1 ,$ $- 1.1 < R 12 / f < - 0.5 ,$ $5 < \left|R21\right| / f ,$ $0.6 < R 22 / f < 1.3 ,$ $0.5 < R 31 / f < 1.2 ,$ $0.6 < R 32 / f < 1.2 ,$ $- 1 < R 41 / f < - 0.3 ,$ $- 2.1 < R 42 / f < - 0.4 ,$ $0.2 < R 51 / f < 0.8 ,$ $2.5 < \left|R52\right| / f ,$ $0.2 < R 61 / f < 0.7 ,$ $0.1 < R 62 / f < 0.35 ,$ $1 < \left|R32/R41\right| < 2 ,$ and $0.3 < \left|\left(R61+R62\right)/f6\right| < 0.8 ;$ wherein, R11 is a radius of curvature of the object side surface (S1) of the first lens (L1) at the optical axis, R12 is a radius of curvature of the image side surface (S2) of the first lens (L1) at the optical axis, R21 is a radius of curvature of an object side surface (S3) of the second lens (L2) at the optical axis, R22 is a radius of curvature of the image side surface (S4) of the second lens (L2) at the optical axis, R31 is a radius of curvature of the object side surface (S5) of the third lens (L3) at the optical axis, R32 is a radius of curvature of the image side surface (S6) of the third lens (L3) at the optical axis, R41 is a radius of curvature of the object side surface (S7) of the fourth lens (L4) at the optical axis, R42 is a radius of curvature of the image side surface (S8) of the fourth lens (L4) at the optical axis, R51 is a radius of curvature of the object side surface (S9) of the fifth lens (L5) at the optical axis, R52 is a radius of curvature of an image side surface (S10) of the fifth lens (L5) at the optical axis, R61 is a radius of curvature of the object side surface (S11) of the sixth lens (L6) at the optical axis, R62 is a radius of curvature of the image side surface (S12) of the sixth lens (L6) at the optical axis, f is an effective focal length of the optical system (10), and f6 is an effective focal length of the sixth lens (L6).

3. The optical system (10) of claim 1, **characterized in that**, the optical system (10) further satisfies at least one of following relational expressions: $0.6 < f 1 / f < 0.9 ,$ $- 1.6 < f 2 / f < - 1 ,$ $7 < \left|f3\right| / f ,$ $- 7 < f 4 / f < - 1 ,$ $0.5 < f 5 / f < 1.2 ,$ and $- 1.6 < f 6 / f < - 1 ;$ wherein, f1 is an effective focal length of the first lens (L1), f2 is an effective focal length of the second lens (L2), f3 is an effective focal length of the third lens (L3), f4 is an effective focal length of the fourth lens (L4), f5 is an effective focal length of the fifth lens (L5), f6 is an effective focal length of the sixth lens (L6), and f is an effective focal length of the optical system (10).

4. The optical system (10) of claim 1, **characterized in that**, the optical system (10) further satisfies following relational expression:$2 < FNO ∗ tan \left(HFOV\right) < 2.4 ,$ wherein, HFOV is half of the maximum field of view of the optical system (10).

5. The optical system (10) of claim 1, further satisfying at least one of following relational expression:$3.8 < f / SD 11 < 4.5 ,$ wherein, f is an effective focal length of the optical system (10), and SD11 is a maximum effective aperture of the object side surface (S1) of the first lens (L1).

6. The optical system (10) of claim 1, **characterized in that**, the optical system (10) further satisfies at least one of following relational expressions: $1 < CT 5 / ET 5 < 1.8 ,$ $0.8 < ET 6 / CT 6 < 1.3 ,$ $1 < CT 5 / CT 6 < 1.8 ,$ $0.5 < AT 56 / AT 23 < 1.8 ,$ $1 < AT 34 / AT 23 < 1.6 ,$ and $4 < T 56 max / T 56 min < 11 ;$ wherein, CT5 is a thickness of the fifth lens (L5) at the optical axis, CT6 is a thickness of the sixth lens (L6) at the optical axis, ET5 is a distance from a position where the object side surface (S9) of the fifth lens (L5) has a maximum effective aperture to a position where an image side surface (S10) of the fifth lens (L5) has a maximum effective aperture along the optical axis, ET6 is a distance from a position where the object side surface (S11) of the sixth lens (L6) has a maximum effective aperture to a position where the image side surface (S12) of the sixth lens (L6) has a maximum effective aperture along the optical axis, AT56 is a distance from the image side surface (S10) of the fifth lens (L5) to the object side surface (S11) of the sixth lens (L6) along the optical axis, AT23 is a distance from the image side surface (S4) of the second lens (L2) to the object side surface (S5) of the third lens (L3) along the optical axis, AT34 is a distance from the image side surface (S6) of the third lens (L3) to the object side surface (S7) of the fourth lens (L4) along the optical axis, T56max is a maximum distance parallel to the optical axis between the fifth lens (L5) and the sixth lens (L6), and T56min is a minimum distance parallel to the optical axis between the fifth lens (L5) and the sixth lens (L6).

7. The optical system (10) of claim 1, **characterized in that**, the optical system (10) further satisfies following relational expression: $0.2 < \left(SAG11+SAG21\right) / TTL < 0.3 ;$ wherein, TTL is a distance from the object side surface (S1) of the first lens (L1) to an imaging surface (IMG) of the optical system (10) along the optical axis, SAG11 is a distance from an intersection point of the object side surface (S1) of the first lens (L1) and the optical axis to a position where the image side surface (S2) of the first lens (L1) has a maximum effective aperture along the optical axis, SAG21 is a distance from an intersection point of an object side surface (S3) of the second lens (L2) and the optical axis to a position where the image side surface (S4) of the second lens (L2) has a maximum effective aperture the along the optical axis.

8. The optical system (10) of claim 1, **characterized in that**, the optical system (10) further satisfies at least one of following relational expressions: $4 < L 42 / \left(W4+V4\right) < 5 , 4 < L 62 / \left(W6+V6\right) < 6 ;$ wherein, L42 is half of a maximum effective aperture of the image side surface (S8) of the fourth lens (L4), W4 is half of a maximum thickness of the fourth lens (L4), V4 is half of a minimum thickness of the fourth lens (L4), L62 is half of a maximum effective aperture of the image side surface (S12) of the sixth lens (L6), W6 is half of a maximum thickness of the sixth lens (L6), and V6 is half of a minimum thickness of the sixth lens (L6).

9. The optical system (10) of claim 1, **characterized in that**, the optical system (10) further satisfies following relational expression: $1.1 < TTL / ImgH < 1.4 ;$ wherein, TTL is a distance from the object side surface (S1) of the first lens (L1) to an imaging surface (IMG) of the optical system (10) along the optical axis, and ImgH is half of an image height corresponding to the maximum field of view of the optical system (10).

10. The optical system (10) of claim 1, **characterized in that**, the optical system (10) further satisfies following relational expression: $85 deg < FOV < 100 deg ;$ wherein, FOV is a maximum field of view of the optical system (10).

11. The optical system (10) of claim 1, **characterized in that**, the optical system (10) further satisfies at least one of following relational expression: $1.1 < CT 1 / SD 11 < 1.4 ;$ wherein, CT1 is a thickness of the first lens (L1) at the optical axis, and SD11 is a maximum effective aperture of the object side surface (S1) of the first lens (L1).

12. The optical system (10) of claim 1, further satisfying at least one of following relational expression: $0.6 < ET 1 / CT 1 < 0.9 ;$ wherein, CT1 is a thickness of the first lens (L1) at the optical axis, and ET1 is a distance from a position where the object side surface (S1) of the first lens (L1) has a maximum effective aperture to a position where the image side surface (S2) of the first lens (L1) has a maximum effective aperture along the optical axis.

13. The optical system of claim 1, further satisfying at least one of following relational expression: $3 < TD / CT 1 < 4 ,$ wherein, TD is a distance from the object side surface (S1) of the first lens (L1) to the image side surface (S12) of the sixth lens (L6) along the optical axis, and CT1 is a thickness of the first lens (L1) at the optical axis.

14. A camera module (20), **characterized in that**, the camera module (20) comprises the optical system (10) of any one of claims 1 to 13 and a photosensitive chip (21), the photosensitive chip (21) is located on an image side of the optical system (10).

15. An electronic device (30), **characterized in that**, the electronic device (30) comprises a housing (31) and a camera module (20) of claim 14, the camera module (20) is located in the housing.

## Patentansprüche

1. Ein optisches System (10), wobei das optische System (10) aus sechs Linsen mit Brechkraft besteht, wobei die sechs Linsen von einer Objektseite zu einer Bildseite entlang einer optischen Achse nacheinander Folgendes umfassen:
eine erste Linse (L1) mit positiver Brechkraft, und wobei eine objektseitige Oberfläche (S1) und eine bildseitige Oberfläche (S2) der ersten Linse (L1) in der Nähe der optischen Achse konvex sind;
eine zweite Linse (L2) mit Brechkraft, und wobei eine bildseitige Oberfläche (S4) der zweiten Linse (L2) in der Nähe der optischen Achse konkav ist;
eine dritte Linse (L3) mit Brechkraft;
eine vierte Linse (L4) mit negativer Brechkraft, wobei eine objektseitige Oberfläche (S7) der vierten Linse (L4) in der Nähe der optischen Achse konkav ist und eine bildseitige Oberfläche (S8) der vierten Linse (S7) in der Nähe der optischen Achse konvex ist;
eine fünfte Linse (L5) mit positiver Brechkraft, und wobei eine objektseitige Oberfläche (S9) der fünften Linse (L5) in der Nähe der optischen Linse konvex ist; und
eine sechste Linse (L6) mit negativer Brechkraft, wobei eine objektseitige Oberfläche (S11) der sechsten Linse (L6) in der Nähe der optischen Achse konvex ist und eine bildseitige Oberfläche (S12) der sechsten Linse (L6) in der Nähe der optischen Achse konkav ist;
wobei das optische System (10) die folgende Beziehung erfüllt: $1.9 < FNO < 2.3 ;$
wobei FNO eine Blendenzahl des optischen Systems (10) ist,
**dadurch gekennzeichnet, dass** eine objektseitige Oberfläche (S5) der dritten Linse (L3) in der Nähe der optischen Achse konvex ist und eine bildseitige Oberfläche (S6) der dritten Linse (L3) in der Nähe der optischen Achse konkav ist.

2. Das optische System (10) nach Anspruch 1, **dadurch gekennzeichnet, dass** das optische System (10) ferner mindestens eine der folgenden Beziehungen erfüllt: $0.5 < R 11 / f < 1.1 ,$ $- 1.1 < R 12 / f < - 0.5 ,$ $5 < \left|R21\right| / f ,$ $0.6 < R 22 / f < 1.3 ,$ $0.5 < R 31 / f < 1.2 ,$ $0.6 < R 32 / f < 1.2 ,$ $- 1 < R 41 / f < - 0.3 ,$ $- 2.1 < R 42 / f < - 0.4 ,$ $0.2 < R 51 / f < 0.8 ,$ $2.5 < \left|R52\right| / f ,$ $0.2 < R 61 / f < 0.7 ,$ $0.1 < R 62 / f < 0.35 ,$ $1 < \left|R32/R41\right| < 2 ,$ und $0.3 < \left|\left(R61+R62\right)/f6\right| < 0.8 ;$ wobei R11 ein Krümmungsradius der objektseitigen Oberfläche (S1) der ersten Linse (L1) an der optischen Achse ist, R12 ein Krümmungsradius der bildseitigen Oberfläche (S2) der ersten Linse (L1) an der optischen Achse ist, R21 ein Krümmungsradius einer objektseitigen Oberfläche (S3) der zweiten Linse (L2) an der optischen Achse ist, R22 ein Krümmungsradius der bildseitigen Oberfläche (S4) der zweiten Linse (L2) an der optischen Achse ist, R31 ein Krümmungsradius der objektseitigen Oberfläche (S5) der dritten Linse (L3) an der optischen Achse ist, R32 ein Krümmungsradius der bildseitigen Oberfläche (S6) der dritten Linse (L3) an der optischen Achse ist, R41 ein Krümmungsradius der objektseitigen Oberfläche (S7) der vierten Linse (L4) an der optischen Achse ist, R42 ein Krümmungsradius der bildseitigen Oberfläche (S8) der vierten Linse (L4) an der optischen Achse ist, R51 ein Krümmungsradius der objektseitigen Oberfläche (S9) der fünften Linse (L5) an der optischen Achse ist, R52 ein Krümmungsradius einer bildseitigen Oberfläche (S10) der fünften Linse (L5) an der optischen Achse ist, R61 ein Krümmungsradius der objektseitigen Oberfläche (S11) der sechsten Linse (L6) an der optischen Achse ist, R62 ein Krümmungsradius der bildseitigen Oberfläche (S12) der sechsten Linse (L6) an der optischen Achse ist, f eine effektive Brennweite des optischen Systems (10) ist und f6 eine effektive Brennweite der sechsten Linse (L6) ist.

3. Das optische System (10) nach Anspruch 1, **dadurch gekennzeichnet, dass** das optische System (10) ferner mindestens eine der folgenden Beziehungen erfüllt: $0.6 < f 1 / f < 0.9 ,$ $- 1.6 < f 2 / f < - 1 ,$ $7 < \left|f3\right| / f ,$ $- 7 < f 4 / f < - 1 ,$ $0.5 < f 5 / f < 1.2 ,$ und $- 1.6 < f 6 / f < - 1 ;$ wobei f1 eine effektive Brennweite der ersten Linse (L1) ist, f2 eine effektive Brennweite der zweiten Linse (L2) ist, f3 eine effektive Brennweite der dritten Linse (L3) ist, f4 eine effektive Brennweite der vierten Linse (L4) ist, f5 eine effektive Brennweite der fünften Linse (L5) ist, f6 eine effektive Brennweite der sechsten Linse (L6) ist und f eine effektive Brennweite des optischen Systems (10) ist.

4. Das optische System (10) nach Anspruch 1, **dadurch gekennzeichnet, dass** das optische System (10) ferner die folgende Beziehung erfüllt:$2 < FNO ∗ tan \left(HFOV\right) < 2.4 ;$ wobei HFOV die Hälfte des maximalen Sichtfelds des optischen Systems (10) ist.

5. Das optische System (10) nach Anspruch 1, das ferner mindestens eine der folgenden Beziehungen erfüllt:$3.8 < f / SD 11 < 4.5 ;$ wobei f eine effektive Brennweite des optischen Systems (10) ist und SD11 eine maximale effektive Apertur der objektseitigen Oberfläche (S1) der ersten Linse (L1) ist.

6. Das optische System (10) nach Anspruch 1, **dadurch gekennzeichnet, dass** das optische System (10) ferner mindestens eine der folgenden Beziehungen erfüllt: $1 < CT 5 / ET 5 < 1.8 ,$ $0.8 < ET 6 / CT 6 < 1.3 ,$ $1 < CT 5 / CT 6 < 1.8 ,$ $0.5 < AT 56 / AT 23 < 1.8 ,$ $1 < AT 34 / AT 23 < 1.6 ,$ und $4 < T 56 max / T 56 min < 11 ;$ wobei CT5 eine Dicke der fünften Linse (L5) an der optischen Achse ist, CT6 eine Dicke der sechsten Linse (L6) an der optischen Achse ist, ET5 ein Abstand von einer Position, an der die objektseitige Oberfläche (S9) der fünften Linse (L5) eine maximale effektive Apertur aufweist, zu einer Position, an der eine bildseitige Oberfläche (S10) der fünften Linse (L5) eine maximale effektive Apertur aufweist, entlang der optischen Achse ist, ET6 ein Abstand von einer Position, an der die objektseitige Oberfläche (S11) der sechsten Linse (L6) eine maximale effektive Apertur aufweist, zu einer Position, an der die bildseitige Oberfläche (S12) der sechsten Linse (L6) eine maximale effektive Apertur aufweist, entlang der optischen Achse ist, AT56 ein Abstand von der bildseitigen Oberfläche (S10) der fünften Linse (L5) zu der objektseitigen Oberfläche (S11) der sechsten Linse (L6) entlang der optischen Achse ist, AT23 ein Abstand von der bildseitigen Oberfläche (S4) der zweiten Linse (L2) zu der objektseitigen Oberfläche (S5) der dritten Linse (L3) entlang der optischen Achse ist, AT34 ein Abstand von der bildseitigen Oberfläche (S6) der dritten Linse (L3) zu der objektseitigen Oberfläche (S7) der vierten Linse (L4) entlang der optischen Achse ist, T56max ein maximaler Abstand parallel zur optischen Achse zwischen der fünften Linse (L5) und der sechsten Linse (L6) ist, und T56min ein minimaler Abstand parallel zur optischen Achse zwischen der fünften Linse (L5) und der sechsten Linse (L6) ist.

7. Das optische System (10) nach Anspruch 1, **dadurch gekennzeichnet, dass** das optische System (10) ferner die folgende Beziehung erfüllt: $0.2 < \left(SAG11+SAG21\right) / TTL < 0.3 ;$ wobei TTL ein Abstand von der objektseitigen Oberfläche (S1) der ersten Linse (L1) zu einer Bildgebungsfläche (IMG) des optischen Systems (10) entlang der optischen Achse ist, SAG11 ein Abstand von einem Schnittpunkt der objektseitigen Oberfläche (S1) der ersten Linse (L1) und der optischen Achse zu einer Position, an der die bildseitige Oberfläche (S2) der ersten Linse (L1) eine maximale effektive Apertur aufweist, entlang der optischen Achse ist, SAG21 ein Abstand von einem Schnittpunkt einer objektseitigen Oberfläche (S3) der zweiten Linse (L2) und der optischen Achse zu einer Position, an der die bildseitige Oberfläche (S4) der zweiten Linse (L2) eine maximale effektive Apertur aufweist, entlang der optischen Achse ist.

8. Das optische System (10) nach Anspruch 1, **dadurch gekennzeichnet, dass** das optische System (10) ferner mindestens eine der folgenden Beziehungen erfüllt: $4 < L 42 / \left(W4+V4\right) < 5 ,$ $4 < L 62 / \left(W6+V6\right) < 6 ;$ wobei L42 die Hälfte einer maximalen effektiven Apertur der bildseitigen Oberfläche (S8) der vierten Linse (L4) ist, W4 die Hälfte einer maximalen Dicke der vierten Linse (L4) ist, V4 die Hälfte einer minimalen Dicke der vierten Linse (L4) ist, L62 die Hälfte einer maximalen effektiven Apertur der bildseitigen Oberfläche (S12) der sechsten Linse (L6) ist, W6 die Hälfte einer maximalen Dicke der sechsten Linse (L6) ist und V6 die Hälfte einer minimalen Dicke der sechsten Linse (L6) ist.

9. Das optische System (10) nach Anspruch 1, **dadurch gekennzeichnet, dass** das optische System (10) ferner die folgende Beziehung erfüllt: $1.1 < TTL / ImgH < 1.4 ;$ wobei TTL ein Abstand von der objektseitigen Oberfläche (S1) der ersten Linse (L1) zu einer Bildgebungsfläche (IMG) des optischen Systems (10) entlang der optischen Achse ist, und ImgH die Hälfte einer Bildhöhe ist, die dem maximalen Sichtfeld des optischen Systems (10) entspricht.

10. Das optische System (10) nach Anspruch 1, **dadurch gekennzeichnet, dass** das optische System (10) ferner die folgende Beziehung erfüllt: $85 deg < FOV < 100 deg ;$ wobei FOV ein maximales Sichtfeld des optischen Systems (10) ist.

11. Das optische System (10) nach Anspruch 1, **dadurch gekennzeichnet, dass** das optische System (10) ferner mindestens eine der folgenden Beziehungen erfüllt: $1.1 < CT 1 / SD 11 < 1.4 ;$ wobei CT1 eine Dicke der ersten Linse (L1) an der optischen Achse ist und SD11 eine maximale effektive Apertur der objektseitigen Oberfläche (S1) der ersten Linse (L1) ist.

12. Das optische System (10) nach Anspruch 1, das ferner mindestens eine der folgenden Beziehungen erfüllt: $0.6 < ET 1 / CT 1 < 0.9 ;$ wobei CT1 eine Dicke der ersten Linse (L1) an der optischen Achse ist und ET1 ein Abstand von einer Position, an der die objektseitige Oberfläche (S1) der ersten Linse (L1) eine maximale effektive Apertur aufweist, zu einer Position, an der die bildseitige Oberfläche (S2) der ersten Linse (L1) eine maximale effektive Apertur aufweist, entlang der optischen Achse ist.

13. Das optische System nach Anspruch 1, das ferner mindestens eine der folgenden Beziehungen erfüllt: $3 < TD / CT 1 < 4 ;$ wobei TD ein Abstand von der objektseitigen Oberfläche (S1) der ersten Linse (L1) zu der bildseitigen Oberfläche (S12) der sechsten Linse (L6) entlang der optischen Achse ist und CT1 eine Dicke der ersten Linse (L1) an der optischen Achse ist.

14. Ein Kameramodul (20), **dadurch gekennzeichnet, dass** das Kameramodul (20) das optische System (10) nach einem der Ansprüche 1 bis 13 und einen lichtempfindlichen Chip (21) umfasst, wobei der lichtempfindliche Chip (21) auf einer Bildseite des optischen Systems (10) angeordnet ist.

15. Ein elektronisches Gerät (30), **dadurch gekennzeichnet, dass** das elektronische Gerät (30) ein Gehäuse (31) und ein Kameramodul (20) nach Anspruch 14 umfasst, wobei das Kameramodul (20) in dem Gehäuse angeordnet ist.

## Revendications

1. Un système optique (10), dans lequel le système optique (10) est constitué de six lentilles ayant une puissance de réfraction, d'un côté objet vers un côté image le long d'un axe optique, les six lentilles comprenant séquentiellement:
une première lentille (L1) ayant une puissance de réfraction positive, et une surface côté objet (S1) et une surface côté image (S2) de la première lentille (L1) étant convexes près de l'axe optique;
une deuxième lentille (L2) ayant une puissance de réfraction, et une surface côté image (S4) de la deuxième lentille (L2) étant concave près de l'axe optique;
une troisième lentille (L3) ayant une puissance de réfraction;
une quatrième lentille (L4) ayant une puissance de réfraction négative, une surface côté objet (S7) de la quatrième lentille (L4) étant concave près de l'axe optique, et une surface côté image (S8) de la quatrième lentille (S7) étant convexe près de l'axe optique;
une cinquième lentille (L5) ayant une puissance de réfraction positive, et une surface côté objet (S9) de la cinquième lentille (L5) étant convexe près de la lentille optique; et
une sixième lentille (L6) ayant une puissance de réfraction négative, une surface côté objet (S11) de la sixième lentille (L6) étant convexe près de l'axe optique, et une surface côté image (S12) de la sixième lentille (L6) étant concave près de l'axe optique;
dans lequel le système optique (10) satisfait à l'expression relationnelle suivante: $1.9 < FNO < 2.3 ;$
dans lequel FNO est un nombre d'ouverture du système optique (10),
**caractérisé en ce qu'**une surface côté objet (S5) de la troisième lentille (L3) est convexe près de l'axe optique, et une surface côté image (S6) de la troisième lentille (L3) est concave près de l'axe optique.

2. Le système optique (10) selon la revendication 1, **caractérisé en ce que** le système optique (10) satisfait en outre à au moins l'une des expressions relationnelles suivantes: $0.5 < R 11 / f < 1.1 ,$ $- 1.1 < R 12 / f < - 0.5 ,$ $5 < \left|R21\right| / f ,$ $0.6 < R 22 / f < 1.3 ,$ $0.5 < R 31 / f < 1.2 ,$ $0.6 < R 32 / f < 1.2 ,$ $- 1 < R 41 / f < - 0.3 ,$ $- 2.1 < R 42 / f < - 0.4 ,$ $0.2 < R 51 / f < 0.8 ,$ $2.5 < \left|R52\right| / f ,$ $0.2 < R 61 / f < 0.7 ,$ $0.1 < R 62 / f < 0.35 ,$ $1 < \left|R32/R41\right| < 2 ,$ et $0.3 < \left|\left(R61+R62\right)/f6\right| < 0.8 ;$ dans lequel R11 est un rayon de courbure de la surface côté objet (S1) de la première lentille (L1) sur l'axe optique, R12 est un rayon de courbure de la surface côté image (S2) de la première lentille (L1) sur l'axe optique, R21 est un rayon de courbure d'une surface côté objet (S3) de la deuxième lentille (L2) sur l'axe optique, R22 est un rayon de courbure de la surface côté image (S4) de la deuxième lentille (L2) sur l'axe optique, R31 est un rayon de courbure de la surface côté objet (S5) de la troisième lentille (L3) sur l'axe optique, R32 est un rayon de courbure de la surface côté image (S6) de la troisième lentille (L3) sur l'axe optique, R41 est un rayon de courbure de la surface côté objet (S7) de la quatrième lentille (L4) sur l'axe optique, R42 est un rayon de courbure de la surface côté image (S8) de la quatrième lentille (L4) sur l'axe optique, R51 est un rayon de courbure de la surface côté objet (S9) de la cinquième lentille (L5) sur l'axe optique, R52 est un rayon de courbure d'une surface côté image (S10) de la cinquième lentille (L5) sur l'axe optique, R61 est un rayon de courbure de la surface côté objet (S11) de la sixième lentille (L6) sur l'axe optique, R62 est un rayon de courbure de la surface côté image (S12) de la sixième lentille (L6) sur l'axe optique, f est une longueur focale effective du système optique (10), et f6 est une longueur focale effective de la sixième lentille (L6).

3. Le système optique (10) selon la revendication 1, **caractérisé en ce que** le système optique (10) satisfait en outre à au moins l'une des expressions relationnelles suivantes: $0.6 < f 1 / f < 0.9 ,$ $- 1.6 < f 2 / f < - 1 ,$ $7 < \left|f3\right| / f ,$ $- 7 < f 4 / f < - 1 ,$ $0.5 < f 5 / f < 1.2 ,$ et $- 1.6 < f 6 / f < - 1 ;$ dans lequel f1 est une longueur focale effective de la première lentille (L1), f2 est une longueur focale effective de la deuxième lentille (L2), f3 est une longueur focale effective de la troisième lentille (L3), f4 est une longueur focale effective de la quatrième lentille (L4), f5 est une longueur focale effective de la cinquième lentille (L5), f6 est une longueur focale effective de la sixième lentille (L6), et f est une longueur focale effective du système optique (10).

4. Le système optique (10) selon la revendication 1, **caractérisé en ce que** le système optique (10) satisfait en outre à l'expression relationnelle suivante: $2 < FNO * tan \left(HFOV\right) < 2.4 ;$ dans lequel HFOV est la moitié du champ de vision maximal du système optique (10).

5. Le système optique (10) selon la revendication 1, satisfaisant en outre à au moins l'une des expressions relationnelles suivantes: $3.8 < f / SD 11 < 4.5 ;$ dans lequel f est une longueur focale effective du système optique (10), et SD11 est une ouverture effective maximale de la surface côté objet (S1) de la première lentille (L1).

6. Le système optique (10) selon la revendication 1, **caractérisé en ce que** le système optique (10) satisfait en outre à au moins l'une des expressions relationnelles suivantes: $1 < CT 5 / ET 5 < 1.8 ,$ $0.8 < ET 6 / CT 6 < 1.3 ,$ $1 < CT 5 / CT 6 < 1.8 ,$ $0.5 < AT 56 / AT 23 < 1.8 ,$ $1 < AT 34 / AT 23 < 1.6 ,$ et $4 < T 56 max / T 56 min < 11 ;$ dans lequel CT5 est une épaisseur de la cinquième lentille (L5) sur l'axe optique, CT6 est une épaisseur de la sixième lentille (L6) sur l'axe optique, ET5 est une distance d'une position où la surface côté objet (S9) de la cinquième lentille (L5) a une ouverture effective maximale à une position où une surface côté image (S10) de la cinquième lentille (L5) a une ouverture effective maximale le long de l'axe optique, ET6 est une distance d'une position où la surface côté objet (S11) de la sixième lentille (L6) a une ouverture effective maximale à une position où la surface côté image (S12) de la sixième lentille (L6) a une ouverture effective maximale le long de l'axe optique, AT56 est une distance de la surface côté image (S10) de la cinquième lentille (L5) à la surface côté objet (S11) de la sixième lentille (L6) le long de l'axe optique, AT23 est une distance de la surface côté image (S4) de la deuxième lentille (L2) à la surface côté objet (S5) de la troisième lentille (L3) le long de l'axe optique, AT34 est une distance de la surface côté image (S6) de la troisième lentille (L3) à la surface côté objet (S7) de la quatrième lentille (L4) le long de l'axe optique, T56max est une distance maximale parallèle à l'axe optique entre la cinquième lentille (L5) et la sixième lentille (L6), et T56min est une distance minimale parallèle à l'axe optique entre la cinquième lentille (L5) et la sixième lentille (L6).

7. Le système optique (10) selon la revendication 1, **caractérisé en ce que** le système optique (10) satisfait en outre à l'expression relationnelle suivante: $0.2 < \left(SAG11+SAG21\right) / TTL < 0.3 ;$ dans lequel, TTL est une distance depuis la surface côté objet (S1) de la première lentille (L1) jusqu'à une surface d'imagerie (IMG) du système optique (10) le long de l'axe optique, SAG11 est une distance depuis un point d'intersection de la surface côté objet (S1) de la première lentille (L1) et de l'axe optique jusqu'à une position où la surface côté image (S2) de la première lentille (L1) a une ouverture effective maximale le long de l'axe optique, SAG21 est une distance depuis un point d'intersection d'une surface côté objet (S3) de la deuxième lentille (L2) et de l'axe optique jusqu'à une position où la surface côté image (S4) de la deuxième lentille (L2) a une ouverture effective maximale le long de l'axe optique.

8. Le système optique (10) selon la revendication 1, **caractérisé en ce que** le système optique (10) satisfait en outre à au moins l'une des expressions relationnelles suivantes: $4 < L 42 / \left(W4+V4\right) < 5 ,$ $4 < L 62 / \left(W6+V6\right) < 6 ;$ dans lequel, L42 est la moitié d'une ouverture effective maximale de la surface côté image (S8) de la quatrième lentille (L4), W4 est la moitié d'une épaisseur maximale de la quatrième lentille (L4), V4 est la moitié d'une épaisseur minimale de la quatrième lentille (L4), L62 est la moitié d'une ouverture effective maximale de la surface côté image (S12) de la sixième lentille (L6), W6 est la moitié d'une épaisseur maximale de la sixième lentille (L6), et V6 est la moitié d'une épaisseur minimale de la sixième lentille (L6).

9. Le système optique (10) selon la revendication 1, **caractérisé en ce que** le système optique (10) satisfait en outre à l'expression relationnelle suivante: $1.1 < TTL / ImgH < 1.4 ;$ dans lequel, TTL est une distance depuis la surface côté objet (S1) de la première lentille (L1) jusqu'à une surface d'imagerie (IMG) du système optique (10) le long de l'axe optique, et ImgH est la moitié d'une hauteur d'image correspondant au champ de vision maximal du système optique (10).

10. Le système optique (10) selon la revendication 1, **caractérisé en ce que** le système optique (10) satisfait en outre à l'expression relationnelle suivante: $85 deg < FOV < 100 deg ;$ dans lequel, FOV est un champ de vision maximal du système optique (10).

11. Le système optique (10) selon la revendication 1, **caractérisé en ce que** le système optique (10) satisfait en outre à au moins l'une des expressions relationnelles suivantes: $1.1 < CT 1 / SD 11 < 1.4 ;$ dans lequel, CT1 est une épaisseur de la première lentille (L1) au niveau de l'axe optique, et SD11 est une ouverture effective maximale de la surface côté objet (S1) de la première lentille (L1).

12. Le système optique (10) selon la revendication 1, satisfaisant en outre à au moins l'une des expressions relationnelles suivantes: $0.6 < ET 1 / CT 1 < 0.9 ;$ dans lequel, CT1 est une épaisseur de la première lentille (L1) au niveau de l'axe optique, et ET1 est une distance depuis une position où la surface côté objet (S1) de la première lentille (L1) a une ouverture effective maximale jusqu'à une position où la surface côté image (S2) de la première lentille (L1) a une ouverture effective maximale le long de l'axe optique.

13. Le système optique selon la revendication 1, satisfaisant en outre à au moins l'une des expressions relationnelles suivantes: $3 < TD / CT 1 < 4 ;$ dans lequel, TD est une distance depuis la surface côté objet (S1) de la première lentille (L1) jusqu'à la surface côté image (S12) de la sixième lentille (L6) le long de l'axe optique, et CT1 est une épaisseur de la première lentille (L1) au niveau de l'axe optique.

14. Un module de caméra (20), **caractérisé en ce que** le module de caméra (20) comprend le système optique (10) selon l'une quelconque des revendications 1 à 13 et une puce photosensible (21), la puce photosensible (21) étant située sur un côté image du système optique (10).

15. Un dispositif électronique (30), **caractérisé en ce que** le dispositif électronique (30) comprend un boîtier (31) et un module de caméra (20) selon la revendication 14, le module de caméra (20) étant situé dans le boîtier.
